(19) Europäisches Patentamt
European Patent Office
Office européen des brevets

(11) EP 4 400 214 A1

(12) **EUROPEAN PATENT APPLICATION**
published in accordance with Art. 153(4) EPC

(43) Date of publication:
17.07.2024 Bulletin 2024/29

(21) Application number: 22883633.4

(22) Date of filing: 20.10.2022

(51) International Patent Classification (IPC):
*B02C 15/04* $^{(2006.01)}$    *F16C 19/52* $^{(2006.01)}$
*F16C 41/00* $^{(2006.01)}$    *G01M 13/045* $^{(2019.01)}$

(52) Cooperative Patent Classification (CPC):
**B02C 15/04; F16C 19/52; F16C 41/00;
G01M 13/045**

(86) International application number:
**PCT/JP2022/039091**

(87) International publication number:
**WO 2023/068329 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.10.2021 JP 2021173170**

(71) Applicant: **Mitsubishi Heavy Industries, Ltd.
Tokyo 100-8332 (JP)**

(72) Inventors:
• **YAMAGUCHI, Sotaro**
 **Yokohama-shi, Kanagawa 220-8401 (JP)**
• **TANIGUCHI, Masahiko**
 **Yokohama-shi, Kanagawa 220-8401 (JP)**
• **UMENO, Takayuki**
 **Yokohama-shi, Kanagawa 220-8401 (JP)**
• **TODA, Akihiro**
 **Yokohama-shi, Kanagawa 220-8401 (JP)**

(74) Representative: **Studio Torta S.p.A.
Via Viotti, 9
10121 Torino (IT)**

(54) **ABNORMALITY DETECTION SYSTEM, SOLID FUEL MILLING DEVICE, AND ABNORMALITY DETECTION METHOD**

(57)     Provided are an anomaly detection system, a solid fuel pulverizing device, and an anomaly detection method that can make a failure of a sensor that detects an anomaly of a roller journal bearing less likely to occur. The anomaly detection system is an anomaly detection system for a roller journal bearing (59) accommodated inside a housing (11) forming an outer shell of the solid fuel pulverizing device and rotatably supporting a pulverizing roller (13) configured to pulverize solid fuel between the pulverizing roller and a pulverizing table. The anomaly detection system includes: a sensing unit (80) provided to the tip, which is located outside the housing (11), of a journal head (45), which supports the pulverizing roller (13) via the roller journal bearing (59) and is attached to the housing (11), and configured to sense information occurring in the journal head (45) due to rotation of the pulverizing roller (13); and a detecting unit configured to detect an anomaly of the roller journal bearing (59) based on information sensed by the sensing unit (80).

FIG. 2

**(Cont. next page)**

# FIG. 2

**Description**

[Technical Field]

The present disclosure relates to an anomaly detection system, a solid fuel pulverizing device, and an anomaly detection method.

[Background Art]

Conventionally, solid fuel such as biomass fuel or coal is pulverized into fine powder within a predetermined particle diameter range by a pulverizer (mill), and the fine powder is supplied to a combustion device. Solid fuel is input to a pulverizing table, and the mill holds and pulverizes the solid fuel between the pulverizing table and a pulverizing roller. Out of the solid fuel pulverized into fine powder, fine pulverized fuel within a predetermined particle diameter range is sorted by a classifier, carried to a boiler by a carrier gas (primary air) supplied from the outer circumference of the pulverizing table, and combusted by the combustion device. In a thermal power plant, steam is generated by heat exchange with a combustion gas generated by combustion of fine pulverized fuel in a boiler, a steam turbine is driven and rotated by the steam, a power generator connected to the steam turbine is driven and rotated, and thereby power is generated.

The pulverizing roller is installed to a journal head in a rotatable manner via a roller journal bearing. Further, the journal head is installed to a housing of the mill in a swingable manner. A pulverizing load is applied to the pulverizing roller via the journal head by a hydraulic cylinder or the like installed in the housing of the mill during pulverization. Thus, during operation of the mill, the roller journal bearing rotates while transmitting the load applied from the hydraulic cylinder or the like to the pulverizing roller.

In the roller journal bearing, pealing or flaking occurs in the rolling face in accordance with an applied load and a rotational rate. Thus, the lifetime of the roller journal bearing is reduced with use, and the roller journal bearing is finally damaged and ends the lifetime. Thus, it is known to detect an anomaly of the rolling face for the purpose of knowing the lifetime of the roller journal bearing (for example, Patent Literature 1).

An anomaly of the rolling face often appears as vibration of the roller journal bearing. Thus, the device disclosed in Patent Literature 1 is provided with an anomaly sensing sensor (vibration sensor) inside the pulverizing roller, detects vibration generated by the roller journal bearing, and performs anomaly diagnosis on the roller journal bearing.

[Citation List]

[Patent Literature]

[PTL 1]
Japanese Patent Application Laid-Open No. 2018-81012

[Summary of Invention]

[Technical Problem]

In the device disclosed in Patent Literature 1, however, the vibration sensor is provided inside the pulverizing roller. When a sensor that detects an anomaly of the roller journal bearing is installed as discussed above in the immediate vicinity of the pulverizing roller, which is the vibration source, there is a problem that vibration transmitted from the pulverizing roller is likely to cause a failure of the sensor. Further, since the sensor is installed inside the mill at a high temperature, there is a problem that the heat is likely to cause a failure of the sensor. Thus, there is a problem of reduced reliability of the sensor.

Further, since the sensor is installed inside the pulverizing roller in the mill, it is not possible to replace the sensor without suspending the operation of the mill and disassembling the pulverizing roller before installing or replacing the sensor. Thus, when a sensor is replaced because of a failure or maintenance or when a sensor is additionally installed to an already-installed mill, there is a problem of prolonged work of replacement or additional installation of the sensor. Since the mill is not ready to be operated during replacement or additional installation work, there is a problem of a reduced availability factor.

The present disclosure has been made in view of such circumstances and intends to provide an anomaly detection system, a solid fuel pulverizing device, and an anomaly detection method that can make a failure of a sensor that detects an anomaly of a roller journal bearing less likely to occur.

Further, it is intended to provide an anomaly detection system, a solid fuel pulverizing device, and an anomaly detection method that can facilitate replacement and additional installation of the sensor.

[Solution to Problem]

To solve the problems described above, an anomaly detection system, a solid fuel pulverizing device, and an anomaly detection method of the present disclosure employ the following solutions.

An anomaly detection system according to one aspect of the present disclosure is an anomaly detection system for a roller journal bearing, the roller journal bearing being accommodated inside a housing forming an outer shell of a solid fuel pulverizing device and rotatably supporting a pulverizing roller configured to pulverize solid fuel between the pulverizing roller and a pulverizing table, and the anomaly detection system includes: a sensing unit provided to an installation part of a support part and configured to sense information occurring in the support part due to rotation of the pulverizing roller, the support part supporting the pulverizing roller via the roller journal bearing and being attached to the housing, and the installation part being located outside the housing; and a detecting unit configured to detect an anomaly of the roller journal bearing based on information sensed by the sensing unit.

An anomaly detection method according to one aspect of the present disclosure is an anomaly detection method for a roller journal bearing, the roller journal bearing being accommodated inside a housing forming an outer shell of a solid fuel pulverizing device and rotatably supporting a pulverizing roller configured to pulverize solid fuel between the pulverizing roller and a pulverizing table, and the anomaly detection method including: a sensing step of, at a sensing unit provided to an installation part of a support part, sensing information occurring in the support part due to rotation of the pulverizing roller, in which the support part supports the pulverizing roller via the roller journal bearing and is attached to the housing and the installation part is located outside the housing; and a detecting step of detecting an anomaly of the roller journal bearing based on information sensed by the sensing unit.

[Advantageous Effects of Invention]

According to the present disclosure, it is possible to make a failure of a sensor that detects an anomaly of a roller journal bearing less likely to occur.

Further, it is possible to facilitate replacement and additional installation of the sensor.

[Brief Description of Drawings]

[Fig. 1]

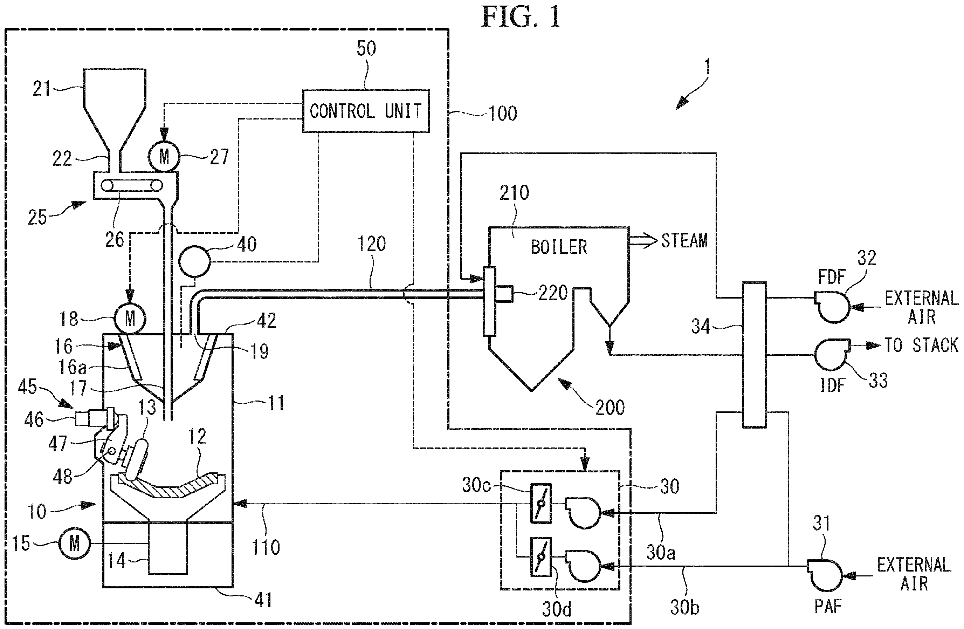

Fig. 1 is a configuration diagram illustrating a solid fuel pulverizing device and a boiler according to a first embodiment of the present disclosure.
[Fig. 2]

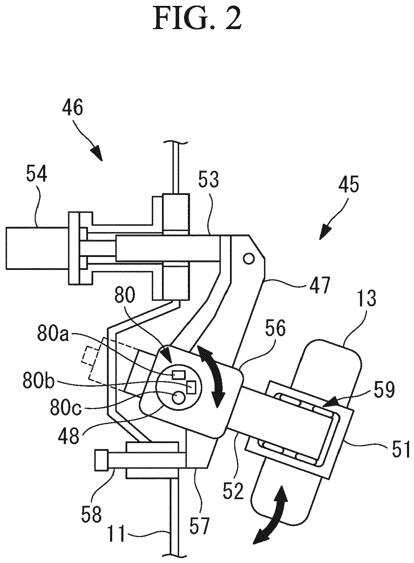

Fig. 2 is a partial enlarged longitudinal sectional view illustrating a part around a pulverizing roller according to the first embodiment of the present disclosure.
[Fig. 3]

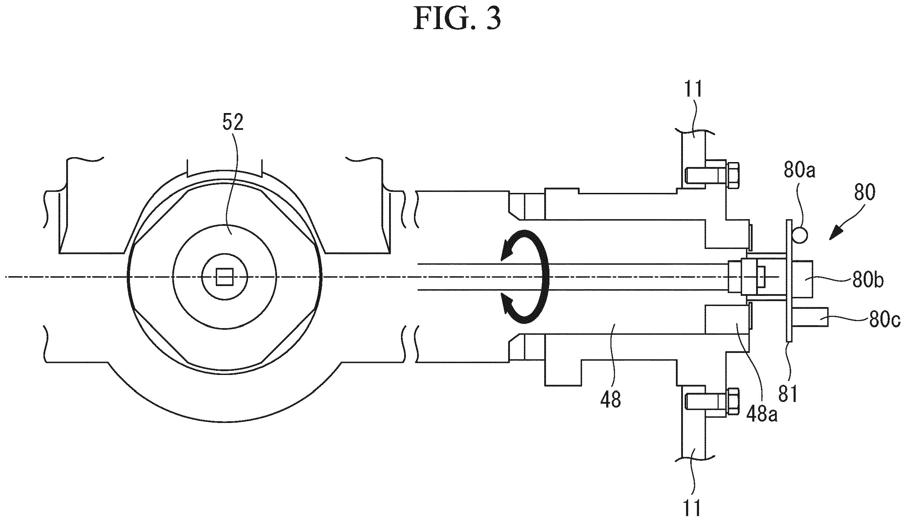

Fig. 3 is a partial enlarged front view illustrating a part around a journal head according to the first embodiment of the present disclosure.
[Fig. 4]

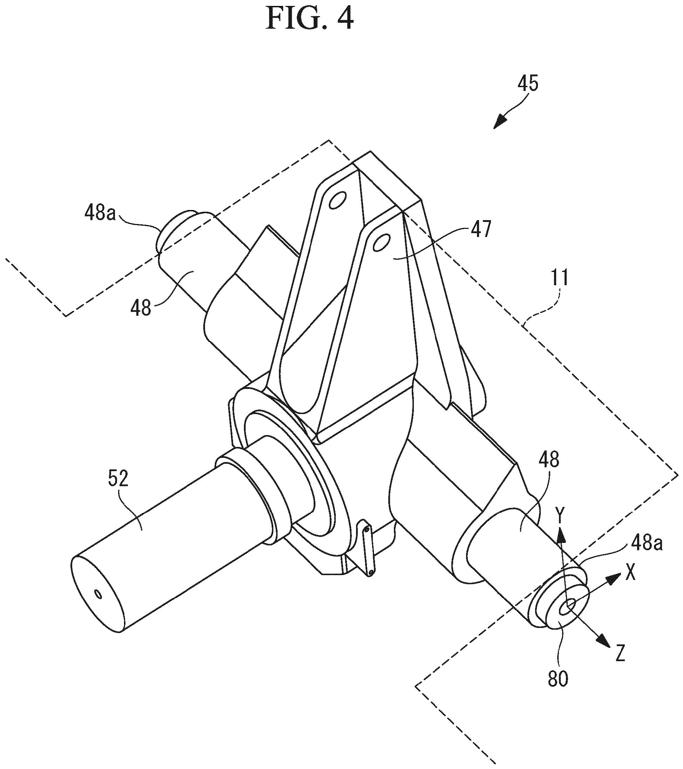

Fig. 4 is a partial enlarged perspective view illustrating a part around the journal head according to the first embodiment of the present disclosure.
[Fig. 5]

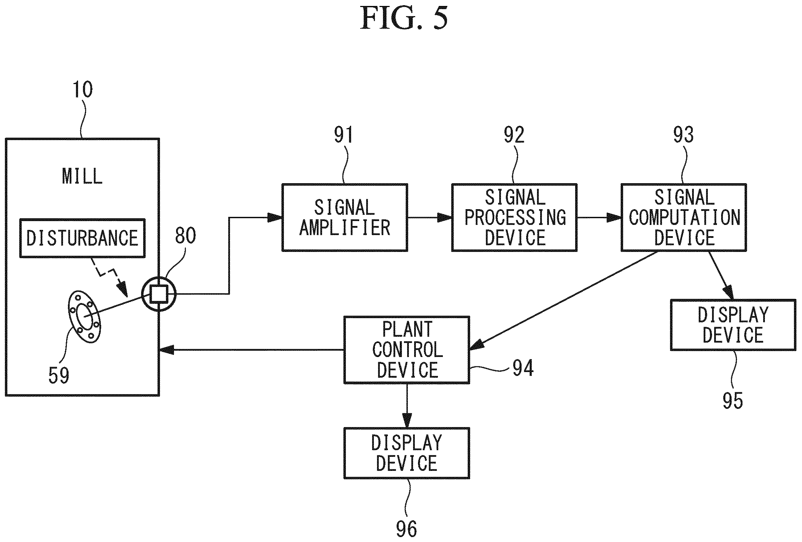

Fig. 5 is a function block diagram illustrating functions of a mill and a control unit according to the first embodiment of the present disclosure.
[Fig. 6]

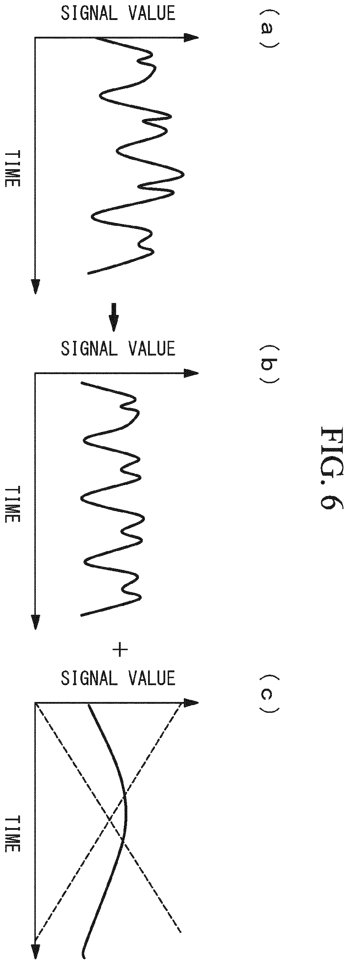

Fig. 6 represents graphs illustrating band filtering performed by the control unit according to the first embodiment of the present disclosure.
[Fig. 7]

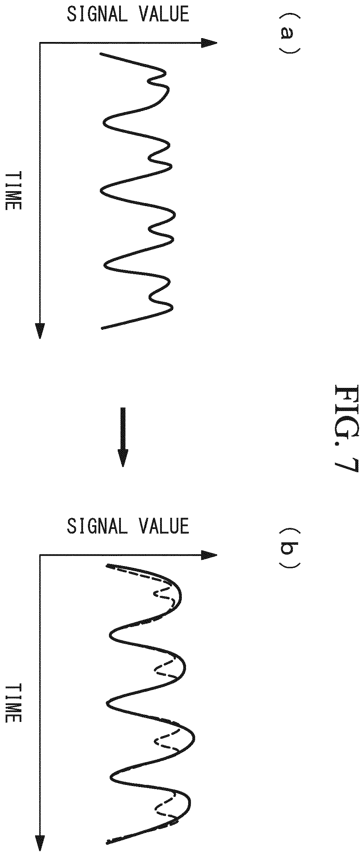

Fig. 7 is graphs illustrating enveloping performed by the control unit according to the first embodiment of the present disclosure.
[Fig. 8]

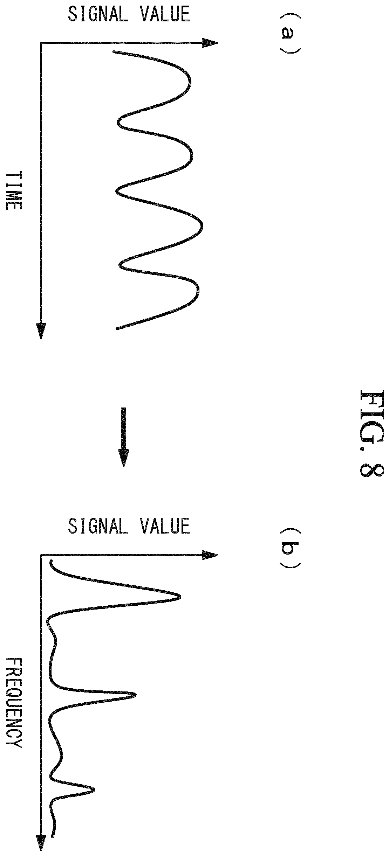

Fig. 8 is graphs illustrating FFT processing performed by the control unit according to the first embodiment of the present disclosure.
[Fig. 9]

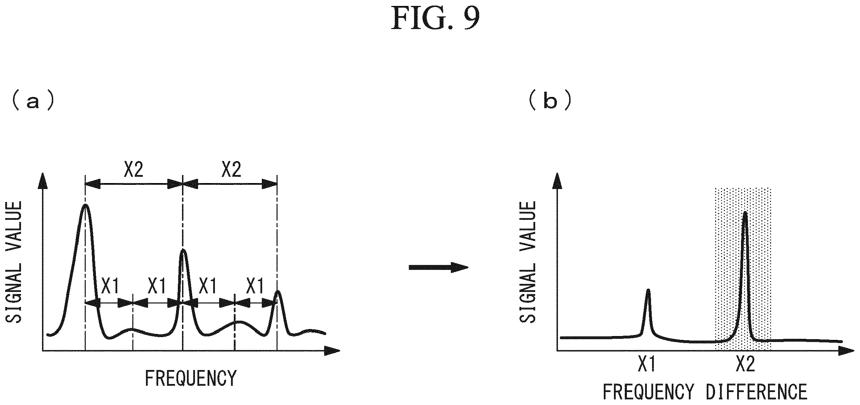

Fig. 9 is graphs illustrating a process of superimposing harmonic contents on a bearing vibration frequency performed by the control unit according to the first embodiment of the present disclosure.

[Fig. 10]

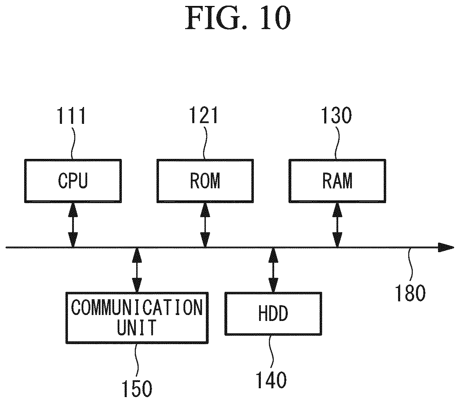

Fig. 10 is a hardware configuration diagram of a control unit according to a second embodiment of the present disclosure.

[Fig. 11]

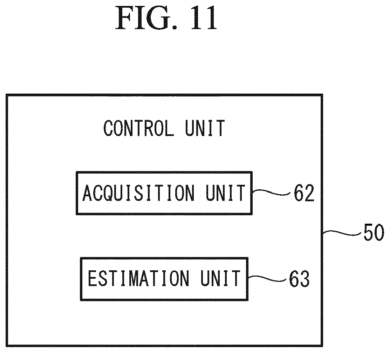

Fig. 11 is a function block diagram illustrating functions of the control unit according to the second embodiment of the present disclosure.

[Fig. 12]

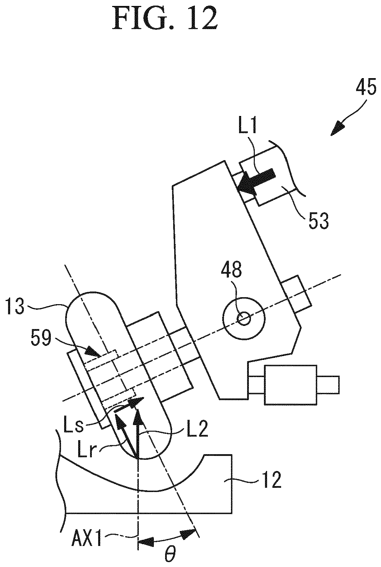

Fig. 12 is a partial enlarged longitudinal sectional view illustrating a load state of a pulverizing roller according to the second embodiment of the present disclosure.

[Fig. 13]

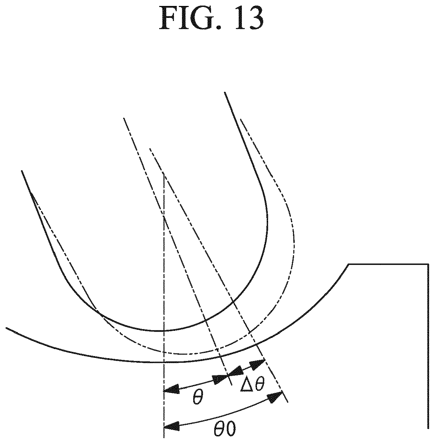

Fig. 13 is a partial enlarged longitudinal sectional view illustrating a roller inclination angle according to the second embodiment of the present disclosure.

[Fig. 14]

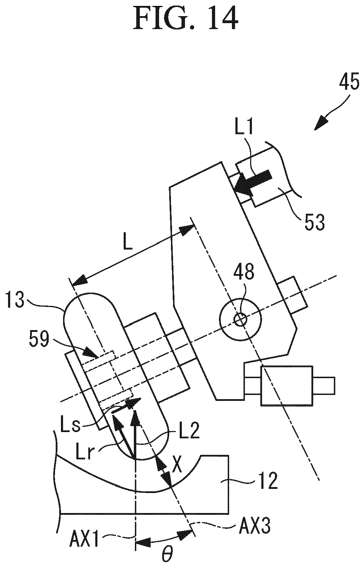

Fig. 14 is a partial enlarged longitudinal sectional view illustrating the roller inclination angle according to the second embodiment of the present disclosure.

[Fig. 15]

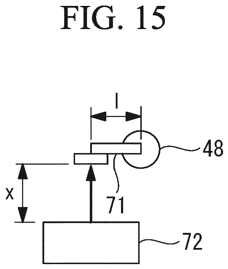

Fig. 15 is a diagram illustrating a configuration example of a gap sensor according to the second embodiment of the present disclosure.

[Fig. 16]

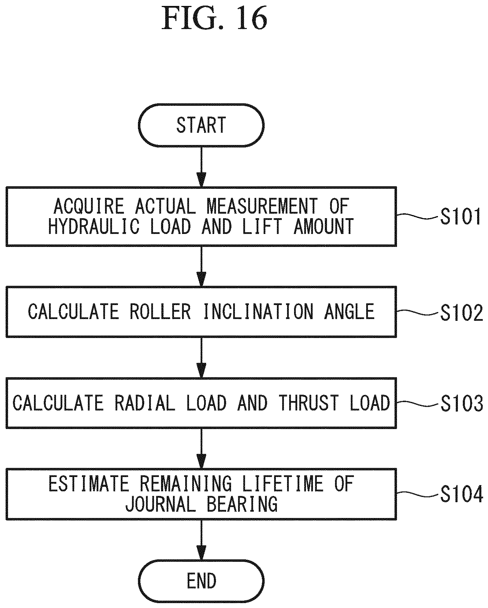

Fig. 16 is a diagram illustrating a flowchart of a remaining lifetime estimation process according to the second embodiment of the present disclosure.

[Fig. 17]

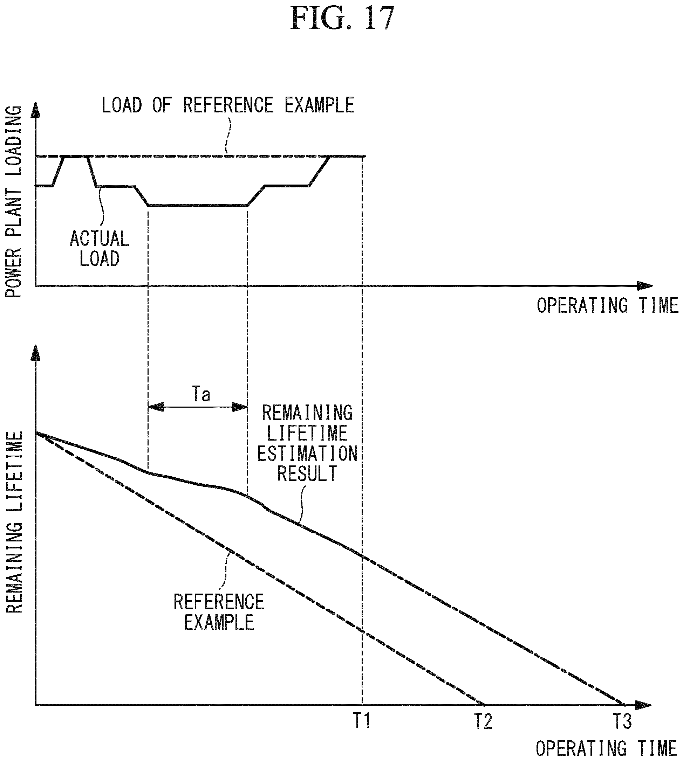

Fig. 17 is a diagram illustrating a remaining lifetime estimation result according to the second embodiment of the present disclosure.

[Fig. 18]

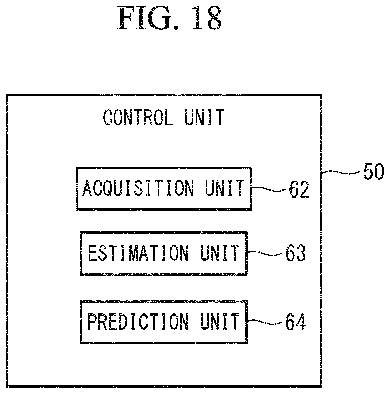

Fig. 18 is a function block diagram illustrating functions of a control unit according to a modified example for the second embodiment of the present disclosure.

[Fig. 19]

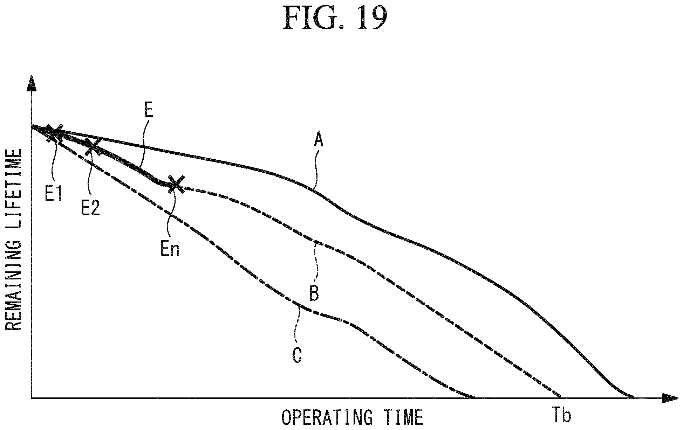

Fig. 19 is a diagram illustrating a remaining lifetime prediction result according to the modified example for the second embodiment of the present disclosure.

[Fig. 20]

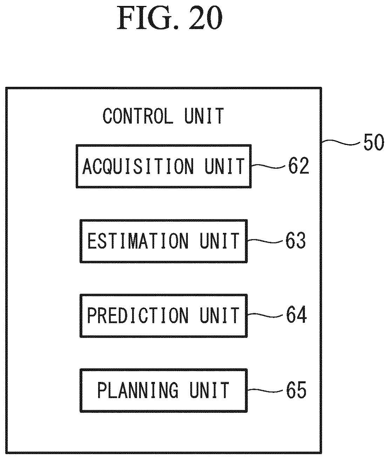

Fig. 20 is a function block diagram illustrating functions of a control unit according to the modified example for the second embodiment of the present disclosure.

[Fig. 21]

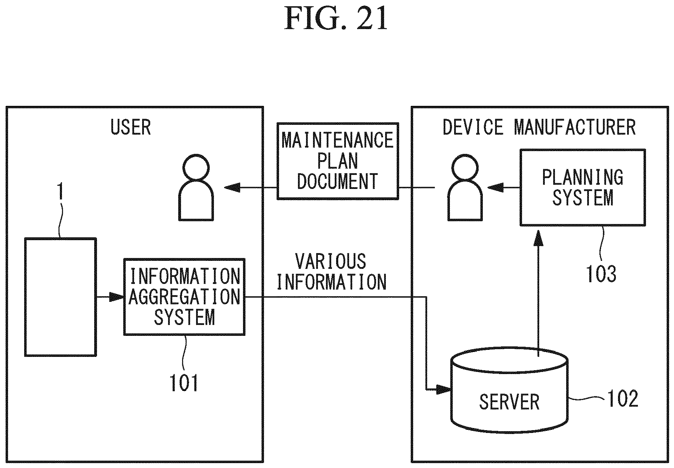

Fig. 21 is a diagram illustrating an example of a system according to a maintenance plan according to the modified example for the second embodiment of the present disclosure.

[Fig. 22]

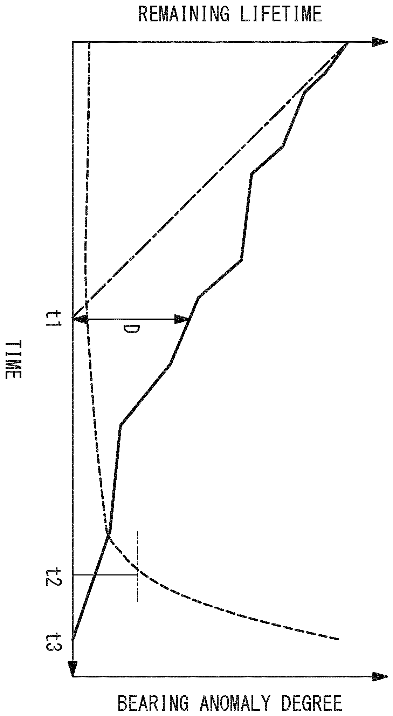

Fig. 22 is a graph illustrating the estimated remaining lifetime per time and the change in bearing anomaly degree of a roller journal bearing according to the second embodiment of the present disclosure.

[Description of Embodiments]

Embodiments of an anomaly detection system, a solid fuel pulverizing device, and an anomaly detection method according to the present disclosure will be described below with reference to the drawings.

[First Embodiment]

A first embodiment of the present disclosure will be described below with reference to the drawings. A power plant 1 according to the present embodiment includes a solid fuel pulverizing device 100 and a boiler 200.

In the following description, "above" refers to a perpendicularly upward direction, and "top" of a top part, a top face, or the like refers to a perpendicularly upper part. Further, similarly, "bottom" refers to a perpendicularly lower part, and "perpendicular direction" is not in a strict sense and includes an error.

The solid fuel pulverizing device 100 of the present embodiment is a device that pulverizes solid fuel such as biomass fuel or coal as an example to produce fine pulverized fuel and supplies the pulverized fuel to a burner (combustion device) 220 of the boiler 200.

Although the power plant 1 including the solid fuel pulverizing device 100 and the boiler 200 illustrated in Fig.

1 has a single solid fuel pulverizing device 100, a system may be configured to have a plurality of solid fuel pulverizing devices 100 corresponding to each of a plurality of burners 220 of a single boiler 200.

The solid fuel pulverizing device 100 of the present embodiment includes a mill (pulverizing unit) 10, a bunker (storage unit) 21, a coal feeder (fuel feeder) 25, a fan unit (carrier gas supply unit) 30, a state detecting unit 40, and a control unit 50.

The mill 10 that pulverizes solid fuel such as coal or biomass fuel to be supplied to the boiler 200 into fine pulverized fuel, which is pulverized solid fuel, may be of a form of pulverizing only coal, may be of a form of pulverizing only biomass fuel, or may be of a form of pulverizing biomass fuel together with coal.

Herein, the biomass fuel is an organic resource of renewable biological origin, for example, thinned wood, waste wood, driftwood, grasses, waste, sludge, tires, and recycle fuel (pellets or chips) or the like made therefrom, and is not limited to those presented here. Since the biomass fuel takes in carbon dioxide in a growth process of the biomass and thus serves as carbon neutral that does not emit carbon dioxide that becomes a greenhouse gas, various uses thereof have been considered.

The mill 10 includes a housing 11, a pulverizing table 12, a pulverizing roller 13, a gear (drive transmission unit) 14, a mill motor (drive unit) 15 connected to the gear 14 and configured to drive and rotate the pulverizing table 12, a rotary classifier (classifying unit) 16, a coal feed pipe (fuel feed unit) 17, and a classifier motor 18 configured to drive and rotate the rotary classifier 16.

The housing 11 is a casing that is formed in a cylindrical shape extending in the perpendicular direction and accommodates the pulverizing table 12, the pulverizing roller 13, the rotary classifier 16, and the coal feed pipe 17.

The coal feed pipe 17 is attached to the center part of a ceiling 42 of the housing 11. The coal feed pipe 17 is to feed solid fuel guided from the bunker 21 via the coal feeder 25 into the housing 11 and is arranged vertically at the center position of the housing 11, and the bottom end thereof is provided extending into the housing 11.

The gear 14 is installed near a bottom face 41 of the housing 11, and the pulverizing table 12 configured to be rotated by drive force transmitted from the mill motor 15 connected to the gear 14 is arranged in a rotatable manner.

The pulverizing table 12 is a member that is circular in planar view, and the bottom end of the coal feed pipe 17 is arranged so as to face the pulverizing table 12. The top face of the pulverizing table 12 may have such a slope shape that is lower at the center part and gradually becomes higher outward and have an outer circumferential part bent upward, for example. The coal feed pipe 17 feeds solid fuel (for example, coal or biomass fuel in the present embodiment) from above toward the pulverizing table 12 below, and the pulverizing table 12 holds and pulverizes the fed solid fuel between the pulverizing table 12 and the pulverizing roller 13.

Once solid fuel is input to the center part of the pulverizing table 12 from the coal feed pipe 17, the solid fuel is guided to the outer circumferential side of the pulverizing table 12 by centrifugal force caused by rotation of the pulverizing table 12 and held and pulverized between the pulverizing table 12 and the pulverizing roller 13. The pulverized solid fuel is blown upward by a carrier gas (hereafter, referred to as primary air) guided from a carrier gas flow path (hereafter, referred to as a primary air flow path) 110 and guided to the rotary classifier 16.

The outer circumference of the pulverizing table 12 is provided with an air outlet (not illustrated) for causing primary air flowing in from the primary air flow path 110 to flow out to the space above the pulverizing table 12 inside the housing 11. Swirl vanes (not illustrated) are installed to the air outlet and provide swivel force to the primary air blown out of the air outlet. The primary air provided with swivel force by the swirl vanes becomes an air flow having a swiveling velocity component and carries the solid fuel pulverized on the pulverizing table 12 to the rotary classifier 16 located above inside the housing 11. Note that, out of pulverized solid fuel, pieces of solid fuel larger than a predetermined particle diameter are classified by the rotary classifier 16 or drop without reaching the rotary classifier 16, are returned to the pulverizing table 12, and are pulverized again between the pulverizing table 12 and the pulverizing roller 13.

The pulverizing roller 13 is a rotary body that pulverizes solid fuel fed from the coal feed pipe 17 to the pulverizing table 12. The pulverizing roller 13 is pressed against the top face of the pulverizing table 12 and cooperates with the pulverizing table 12 to pulverize solid fuel.

Although Fig. 1 illustrates only one pulverizing roller 13 as representative, a plurality of pulverizing rollers 13 are arranged circumferentially with even intervals so as to press the top face of the pulverizing table 12. For example, three pulverizing rollers 13 are arranged circumferentially at equal intervals with angular intervals of 120 degrees on the outer circumference. In such a case, portions where the three pulverizing rollers 13 are in contact with the top face of the pulverizing table 12 (pressing portions) are at an equal distance from the rotation central axis of the pulverizing table 12.

The pulverizing roller 13 can be swung and displaced vertically by a journal head 45 and is supported so that the pulverizing roller 13 can come close to and separate away from the top face of the pulverizing table 12. When the pulverizing table 12 is rotated with the outer circumferential face of the pulverizing roller 13 being in contact with solid fuel on the top face of the pulverizing table 12, the pulverizing roller 13 is subjected to the rotational force from the pulverizing table 12 and forced to rotate accordingly. Once solid fuel is fed from the coal feed pipe 17, the solid fuel is pressed and pulverized between the pulverizing roller 13 and the pulverizing table 12. This pressing force is referred to as a pulverizing load.

A support arm 47 of the journal head 45 is supported at the side face of the housing 11 so that the pulverizing roller 13 can be swung and displaced vertically about the eccentric shaft 48 by an eccentric shaft 48 whose intermediate part runs horizontally. Further, the top end located on the perpendicularly upper side of the support arm 47 is provided with a pressing device (pulverizing load application unit) 46. The pressing device 46 is fixed to the housing 11 and applies a pulverizing load to the pulverizing roller 13 via the support arm 47 and the like so as to press the pulverizing roller 13 against the pulverizing table 12. For example, the pulverizing load is provided by a hydraulic cylinder (not illustrated) activated by a pressure of a hydraulic oil supplied from the hydraulic device (not illustrated) installed outside the mill 10. Further, the pulverizing load may be provided by repulsive force of a spring (not illustrated).

The gear 14 is connected to the mill motor 15, transmits drive force of the mill motor 15 to the pulverizing table 12, and rotates the pulverizing table 12 about the central axis.

The rotary classifier 16 is provided on the top of the housing 11 and has a hollow inverted conical external shape. The rotary classifier 16 has a plurality of blades 16a each extending vertically at the outer circumferential positions thereof. Each blade 16a is provided at a predetermined interval (equal interval) about the central axis of the rotary classifier 16.

The rotary classifier 16 is a device that classifies solid fuel pulverized by the pulverizing table 12 and the pulverizing roller 13 (hereafter, such pulverized solid fuel is referred to as "pulverized fuel") into pieces of fuel that are larger than a predetermined particle diameter (for example, 70 to 100 $\mu$m for coal) (hereafter, pulverized fuel made of pieces exceeding a predetermined particle diameter is referred to as "coarse pulverized fuel") and fuel that is smaller than or equal to the predetermined particle diameter (hereafter, pulverized fuel made of pieces smaller than or equal to a predetermined particle diameter is referred to as "fine pulverized fuel"). The rotary classifier 16 is provided with rotational drive force by the classifier motor 18 controlled by the control unit 50 and rotated around the coal feed pipe 17 about a circular cylindrical shaft (not illustrated) extending vertically with respect to the housing 11.

Note that a stationary classifier including a fixed casing with a hollow inverted conical external shape and a plurality of stationary swirl vanes instead of the blades 16a at outer circumferential positions of the casing may be used as the classifying unit.

Pulverized fuel that has reached the rotary classifier 16 is classified such that, in accordance with relative balance between centrifugal force caused by rotation of the blades 16a and centripetal force caused by an air flow of the primary air, coarse pulverized fuel of a larger diameter is knocked off by the blades 16a and returned to and pulverized again by the pulverizing table 12, and fine pulverized fuel is guided to an outlet port 19 located in a ceiling 42 of the housing 11. The fine pulverized fuel classified by the rotary classifier 16 is discharged to a fine pulverized fuel supply flow path (fine pulverized fuel supply pipe) 120 from the outlet port 19 together with the primary air and supplied to the burner 220 of the boiler 200.

The coal feed pipe 17 is attached vertically so as to penetrate through the ceiling 42 of the housing 11 with the bottom end being provided extending into the housing 11 and feeds solid fuel input from above the coal feed pipe 17 to the center part of the pulverizing table 12. A coal feeder 25 is connected to the top end of the coal feed pipe 17, and solid fuel is fed thereto.

The coal feeder 25 is connected to the bunker 21 via a downspout part 22 that is a pipe extending vertically from the bottom end of the bunker 21. A valve (a coal gate, not illustrated) for switching the discharge state of solid fuel from the bunker 21 may be provided on the way of the downspout part 22. The coal feeder 25 includes a transport unit 26 and a coal feeder motor 27. The transport unit 26 is, for example, a belt conveyer, which transports solid fuel discharged from the bottom end of the downspout part 22 to the top of the coal feed pipe 17 and inputs the solid fuel to inside thereof by drive force of the coal feeder motor 27. The feed amount of solid fuel fed to the mill 10 is controlled by a signal from the control unit 50 via adjustment of the moving speed of the belt conveyer of the transport unit 26, for example.

Typically, the inside of the mill 10 is supplied with the primary air for carrying fine pulverized fuel to the burner 220 and has a higher pressure than the coal feeder 25 or the bunker 21. Fuel is in a layered state inside the downspout part 22 connected between the bunker 21 and the coal feeder 25. This solid fuel layer serves to ensure a seal characteristic (material seal) for suppressing a reverse flow of the primary air and the fine pulverized fuel from the mill 10 to the bunker 21.

Pieces of biomass fuel such as wood chips or wood pellets before pulverized have a constant size compared to coal. For example, while coal before pulverized is in a mass form of 2 to 50 mm, wood pellets each are in a circular cylindrical form of a diameter of 6 to 8 mm and a length of 40 mm or less and are homogeneous. When coal is layered inside the downspout part 22, there is a state where small size pieces of coal are filled in gaps between large size pieces of coal, which is a dense layered state. In contrast, when pieces of biomass fuel are layered inside the downspout part 22, since these pieces have more even sizes than those of coal, the effect of filled gaps by particles of different sizes is not obtained, and gaps formed between pieces of the biomass fuel are larger. Thus, with respect to a likelihood that the primary air and the pulverized fuel inside the mill 10 pass through gaps formed in solid fuel layers in the downspout part 22, a reverse flow occurs from the inside of the mill 10 toward the bunker 21 via the coal feeder 25 and the downspout part 22, and thereby the pressure inside the mill 10 decreases, such a likelihood is higher when biomass fuel is used than when coal fuel is used.

Further, when the primary air and pulverized fuel flows back to the bunker 21 side and the pressure inside the mill 10 decreases, this may cause various problems against stable operation of the solid fuel pulverizing device 100 and the boiler 200, such as deterioration of smooth transport of pulverized fuel inside the mill 10, occurrence of dust inside the coal feeder 25 or above the bunker 21, ignition of solid fuel inside the coal feeder 25, the bunker 21, or the downspout part 22, a reduction in transport amount of fine pulverized fuel to the burner 220, and the like.

Thus, a rotary valve (not illustrated) may be provided on the way of the coal feed pipe 17 connected between the coal feeder 25 and the inside of the mill 10 to suppress occurrence of a reverse flow of the primary air and pulverized fuel from the inside of the mill 10 to the bunker 21 via the coal feeder 25 and the downspout part 22.

The fan unit 30 is a device that blows the primary air, which is for drying and carrying pulverized fuel to the rotary classifier 16, into the housing 11.

The fan unit 30 includes a primary air fan (PAF) 31, a hot gas flow path 30a, a cold gas flow path 30b, a hot gas damper 30c, and a cold gas damper 30d in the present embodiment in order to suitably adjust the flow rate and the temperature of the primary air blown into the housing 11.

In the present embodiment, the hot gas flow path 30a supplies a part of air delivered from the primary air fan 31 as a hot gas that has passed through an air preheater (heat exchanger) 34 and thus has been heated. The hot gas damper 30c is provided to the hot gas flow path 30a. The opening of the hot gas damper 30c is controlled by the control unit 50. The flow rate of the hot gas supplied from the hot gas flow path 30a is determined by the opening of the hot gas damper 30c.

The cold gas flow path 30b supplies a part of air delivered from the primary air fan 31 as a cold gas at normal temperature. The cold gas damper 30d is provided to the cold gas flow path 30b. The opening of the cold gas damper 30d is controlled by the control unit 50. The flow rate of the cold gas supplied from the cold gas flow path 30b is determined by the opening of the cold gas damper 30d.

In the present embodiment, the flow rate of the primary air is the total flow rate of the flow rate of a hot gas supplied from the hot gas flow path 30a and the flow rate of a cold gas supplied from the cold gas flow path 30b, and the temperature of the primary air is determined by a mixture ratio of the hot gas supplied from the hot gas flow path 30a and the cold gas supplied from the cold gas flow path 30b and is controlled by the control unit 50.

Further, for example, a part of a combustion gas discharged from the boiler 200 by a gas recirculation fan (not illustrated) may be guided to and mixed with the hot gas supplied from the hot gas flow path 30a, and thereby the oxygen concentration of the primary air to be blown into the housing 11 from the primary air flow path 110 may be adjusted. For example, when solid fuel with high ignitability (easy to ignite) is used, it is possible to suppress ignition of solid fuel in the flow path from the mill 10 to the burner 220 by adjusting the oxygen concentration of the primary air.

In the present embodiment, data measured or detected by the state detecting unit 40 of the mill 10 is transmitted to the control unit 50. For example, the state detecting unit 40 of the present embodiment is a differential pressure measuring unit, which measures, as the differential pressure in the mill 10, a differential pressure between the pressure at a portion where the primary air flows into the housing 11 from the primary air flow path 110 and the pressure at the outlet port 19 where the primary air and the fine pulverized fuel are discharged to the fine pulverized fuel supply pipe 120 from inside of the housing 11. An increase and a decrease in this differential pressure in the mill 10 correspond to an increase and a decrease in a circulating amount of pulverized fuel circulating between a part near the rotary classifier 16 and a part near the pulverizing table 12 inside the housing 11 due to the classification effect of the rotary classifier 16. That is, since the amount and the particle diameter range of fine pulverized fuel discharged from the outlet port 19 can be adjusted by adjustment of the rotational number of the rotary classifier 16 in accordance with such a differential pressure in the mill 10, an amount of fine pulverized fuel corresponding to the feed amount of solid fuel to the mill 10 can be stably supplied to the burner 220 provided to the boiler 200 while the particle diameter of the fine pulverized fuel is maintained in a range that does not affect the combustibility of the solid fuel in the burner 220.

Further, for example, the state detecting unit 40 of the present embodiment is a temperature measuring unit, which determines the temperature of the primary air supplied into the housing 11 (mill inlet primary air temperature) or the temperature of a mixed gas of the primary air and fine pulverized fuel at the outlet port 19 (mill outlet primary air temperature) and controls the fan unit 30 so that respective upper limit temperatures are not exceeded. Each upper limit temperature is determined taking a possibility of ignition in accordance with characteristics of solid fuel or the like into consideration. Note that, since the primary air is cooled by being carried while drying pulverized fuel inside the housing 11, the primary air temperature at the mill inlet will range from normal temperature to about 300 degrees Celsius, for example, and the primary air temperature at the mill outlet will range from normal temperature to about 90 degrees Celsius, for example.

The control unit 50 is a device that controls each unit of the solid fuel pulverizing device 100.

For example, the control unit 50 may transfer a drive instruction to the mill motor 15 to control the rotational rate of the pulverizing table 12.

For example, the control unit 50 can control the rotational rate of the rotary classifier 16 to adjust the classification performance by transferring a drive instruction to the classifier motor 18 and stably supply, to the burner 220, an amount of fine pulverized fuel corresponding to the supply amount of solid fuel to the mill 10 while maintaining the particle diameter of the fine pulverized fuel in a range that does not affect the combustibility of the solid fuel in the burner 220.

Further, for example, the control unit 50 can adjust the feed amount (coal feed amount) of solid fuel to be fed to the mill 10 by transferring a drive instruction to the coal feeder motor 27.

Further, the control unit 50 can control the openings of the hot gas damper 30c and the cold gas damper 30d to adjust the flow rate and the temperature of the primary air by transferring an opening instruction to the fan unit 30. Specifically, the control unit 50 controls the openings of the hot gas damper 30c and the cold gas damper 30d so that the flow rate of the primary air to be supplied into the housing 11 and the temperature of the primary air at the outlet port 19 (mill outlet primary air temperature) are predetermined values set in association with a coal feed amount for each type of solid fuel. Note that the control of the temperature of the primary air may be performed on the temperature at the mill inlet (mill inlet primary air temperature).

For example, the control unit 50 is composed of a central processing unit (CPU), a random access memory (RAM), a read only memory (ROM), a computer readable storage medium, and the like. Further, a series of processes for implementing various functions are stored in a storage medium or the like in a form of a program as an example, and the various functions are implemented when the CPU loads such a program into the RAM or the like to perform modification or computation processing on information. Note that, for a program, a form in which the program is installed in advance in the ROM or another storage medium, a form in which the program is provided in a state of being stored in a computer readable storage medium, a form in which the program is delivered via a wired or wireless communication connection, or the like may be applied. The computer readable storage medium may be a magnetic disk, a magnetic optical disk, a CD-ROM, a DVD-ROM, a semiconductor memory, or the like. Further, the HDD may be replaced with a solid state disk (SSD) or the like.

Note that the configuration of the control unit 50 is not limited to the configuration described above. For example, the hardware configuration of the control unit 50 may be configured as illustrated in Fig. 11. The detail of the configuration illustrated in Fig. 11 will be described later.

Next, the boiler 200 that generates steam by combustion of fine pulverized fuel supplied from the solid fuel pulverizing device 100 will be described. The boiler 200 includes a furnace 210 and the burner 220.

The burner 220 is a device that combusts fine pulverized fuel to form flame by using a mixed gas and secondary air, the mixed gas is a mixture of the fine pulverized fuel supplied from the fine pulverized fuel supply pipe 120 and the primary air, and the secondary air is supplied by using the air preheater 34 to heat air (external air) delivered from a forced draft fan (FDF) 32. Combustion of fine pulverized fuel takes place in the furnace 210, and the combustion gas at an elevated temperature is discharged to outside of the boiler 200 after passing through heat exchangers (not illustrated) such as an evaporator, a superheater, or an economizer.

The combustion gas discharged from the boiler 200 is subjected to predetermined treatment at an environmental device (a denitrizer, a dust collector, a desulfurizer, or the like, not illustrated), subjected to heat exchange with the primary air or the secondary air at the air preheater 34, guided to a stack (not illustrated) via an induced draft fan (IDF) 33, and released to the external air. The air heated by the combustion gas at the air preheater 34 and delivered from the primary air fan 31 is supplied to the hot gas flow path 30a described above.

The feedwater to each heat exchanger of the boiler 200 is heated at an economizer (not illustrated) and then further heated by an evaporator (not illustrated) and a superheater (not illustrated), and thereby superheated steam at a high temperature and a high pressure is generated. The generated superheated steam is transferred to a steam turbine (not illustrated), which is a power generation unit, thereby the steam turbine is driven and rotated, the power generator (not illustrated) connected to the steam turbine is driven and rotated, and power is generated. Accordingly, the power plant 1 is configured.

Next, details of the pulverizing roller 13 and the anomaly detection system will be described with reference to Fig. 2 to Fig. 9.

First, an example of the detailed configuration of the pulverizing roller 13 will be described with reference to Fig. 2 to Fig. 4. The pulverizing roller 13 is supported on the housing 11 by the journal head (support part) 45. The journal head 45 includes a journal shaft 52 that attaches the pulverizing roller 13 thereto, a main body 56 that holds the journal shaft 52, the eccentric shaft 48 fixed and attached to the side of the main body 56, the support arm 47 attached to the top face of the main body 56 so as to extend upward, and a protruding part 57 provided to the bottom face of the main body 56 so as to protrude downward.

A hollow hub 51 having substantially a circular cylindrical shape is attached to the center of the pulverizing roller 13. The pulverizing roller 13 is attached to the tip of the journal shaft 52 via the hub 51. That is, the pulverizing roller 13 is attached to the journal shaft 52 via a journal bearing (roller journal bearing) 59, and thereby the pulverizing roller 13 is rotatable circumferentially about the journal shaft 52. For example, the roller journal bearing 59 is a roller bearing. Note that, in the present embodiment, an anomaly of the roller journal bearing 59 is detected, as described later. The eccentric shaft 48 has a substantially horizontal axis and is arranged so as to extend in the tangential direction of the circular shape of the pulverizing table 12. The journal head 45 is pivotable about the eccentric shaft 48, and pivoting of the journal head 45 about the eccentric shaft 48 changes the distance (lift amount X (see Fig. 15)) of the pulverizing roller 13 from the pulverizing table 12.

The pressing device 46 that presses the top end of the support arm 47 is attached to the housing 11. The pressing device 46 includes an intermediate piston 53 attached to the housing 11 movably in the longitudinal direction and a hydraulic load unit 54 attached to the outer circumference of the housing 11 and configured to press the outer end of the intermediate piston 53. The inner end of the intermediate piston 53 is in contact with the top end outer circumferential side of the support arm 47. The pressing device 46 generates a hydraulic load L1 (see Fig. 12) by the hydraulic load unit 54 to move the intermediate piston 53 in the longitudinal direction and thereby swings the journal head 45 about the eccentric shaft 48. That is, the pulverizing roller 13 is pressed against the pulverizing table 12 by the pressing device 46.

When the journal head 45 has swung up to a certain position about the eccentric shaft 48, the protruding part 57 abuts against a stopper 58. The stopper 58 functions as a restriction member that restricts the motion amount of the pulverizing roller 13 moving in a direction of pressing the pulverizing table 12.

Next, the anomaly sensing system will be described. The anomaly sensing system includes a vibration sensor 80 that senses vibration occurring in the journal head 45 due to driving of the pulverizing roller 13 and the control unit (detecting unit) 50 that detects an anomaly (damage or the like) of the roller journal bearing 59 based on the vibration information sensed by the vibration sensor 80.

As illustrated in Fig. 3 and Fig. 4, the eccentric shaft 48 is arranged so as to penetrate through the housing 11. Accordingly, the tips (installation parts) 48a in the horizontal direction of the eccentric shaft 48 are located outside the housing 11. That is, the tips 48a are exposed to the outside of the housing 11.

As illustrated in Fig. 3, a base 81 is fixed to the end face of the tip 48a. The tip 48a and the base 81 are fixed to each other so as to avoid relative motion. The base 81 has a leg part extending horizontally and a perpendicular plate part fixed to the tip of the leg part. The vibration sensor 80 is fixed to the plate face of the perpendicular plate part. In detail, a first sensor 80a, a second sensor 80b, and a third sensor 80c are fixed. The first sensor 80a, the second sensor 80b, and the third sensor 80c are fixed to the base 81 so as to avoid relative motion.

For example, the first sensor 80a senses vibration in the vertical direction (the Y-axis direction in Fig. 4). For example, the second sensor 80b senses vibration in the extending direction of the eccentric shaft 48 (the Z-axis direction in Fig. 4). The third sensor 80c senses vibration in the extending direction of the journal shaft 52 (the X-axis direction in Fig. 4).

Note that, although the tips 48a are present at both ends of the eccentric shaft 48 in Fig. 4, the first sensor 80a, the second sensor 80b, and the third sensor 80c may be provided to any one end of the tips 48a.

As described above, the pulverizing roller 13 and the like are swingable about the central axis of the eccentric shaft 48 (see the one-dot chain line in Fig. 3). Thus, vibration in the vertical direction (the Y-axis direction in Fig. 4) of the vibration of the roller journal bearing 59 is transmitted as rotational movement about the eccentric shaft 48. Therefore, the sensor for sensing vertical vibration is desirably not installed on the central axis of the eccentric shaft 48, and preferably installed to the outer circumference of the eccentric shaft 48 so as to be able to sense vibration in the tangential direction. This is because of the following reason. Since vibration is transmitted to the eccentric shaft 48 as vibration in a twisting direction (see the arrow in Fig. 3), if the sensor were installed on the central axis of the eccentric shaft 48, this would require the use of a sensor for detecting torsional vibration, and such a sensor would not be used as any of the sensors that sense axial vibration in other directions.

In the present embodiment, as illustrated in Fig. 2 and Fig. 3, none of the first sensor 80a, the second sensor 80b, and the third sensor 80c is located on the central axis of the eccentric shaft 48.

If the vibration sensor 80 is installed to the tip 48a of the eccentric shaft 48, the distance from the roller journal bearing 59, which is the vibration source, to the vibration sensor 80 will be longer than in a case where the sensor is provided inside the pulverizing roller 13, for example. This may attenuate vibration transmitted to the vibration sensor 80. Since attenuated vibration may prevent accurate detection of an anomaly of the roller journal bearing 59, it is preferable to take measures against such attenuation of vibration.

Thus, in the present embodiment, the transmission path of vibration from the roller journal bearing 59 to the vibration sensor 80 has the shortest and highly rigid structure. In the present embodiment, as illustrated in Fig. 2, vibration of the roller journal bearing 59 is transmitted via the journal shaft 52 and the journal head 45 (main body 56 and the eccentric shaft 48). Therefore, joining of these components forming the vibration transmission path is rigid joining that does not permit relative motion between respective components.

In detail, joining between the roller journal bearing 59 and the journal shaft 52, joining between the journal shaft 52 and the journal head 45 (in detail, the main body 56), joining between the main body 56 and the eccentric shaft 48, and joining of the eccentric shaft 48 and the vibration sensor 80 (in detail, the base 81) are rigid joining.

A specific example of such rigid joining may be joining by shrink fitting or taper press fitting or the like. Further, such rigid joining may be achieved by manufacturing the above components as a single article or may be achieved by firmly fixing the above components to each other by a fastener.

Further, in order to increase rigidity, components forming the transmission path (the journal shaft 52, the main body 56 of the journal head 45, and the eccentric shaft 48) each have a sufficient sectional area when taken along a direction intersecting the longitudinal direction. Such a configuration makes it possible to suppress deformation of each component and make vibration less likely to be attenuated due to deformation.

Further, each component forming the transmission path from the roller journal bearing 59 to the vibration sensor 80 is formed of a material with a low vibration damping capacity, such as structural carbon steel or cast steel, rather than a material with a high vibration damping capacity, such as cast iron. Such a configuration makes it possible to suppress attenuation of vibration.

The vibration frequency occurring during an anomaly of the roller journal bearing 59 can be estimated to some degrees from the structure of the roller journal bearing 59 and the rotational rate of the pulverizing roller 13. The natural frequency (noise) of the component forming a vibration transmission path is set so as not to match a vibration frequency (signal) expected to occur during an anomaly of the roller journal bearing 59. This is because of the following reason. If the natural frequency of a component forming the vibration transmission path matches the vibration frequency occurring during an anomaly of the roller journal bearing 59, this may cause inability of determining whether the vibration waveform sensed by the vibration sensor 80 is due to abnormal vibration of the roller journal bearing 59 or is the natural frequency of the component forming the vibration transmission path, and the setting described above is employed in order to prevent such malfunction.

Note that the natural frequency of a component forming a vibration transmission path may be found by calculation or may be found experimentally by performing a hammering test or the like on the component in question. Further, if the natural frequency of a component forming a vibration transmission path matches the vibration frequency occurring during an anomaly of the roller journal bearing 59, it will be preferable to change the spring constant or the mass of the component forming the vibration transmission path to shift the natural frequency from the expected vibration frequency. Further, if such matching occurs in only a particular harmonic content (N-th order), a process to exclude the harmonic from the evaluation target may be applied.

In the present embodiment, the number of components forming the vibration transmission path is large as described above. Thus, information on the vibration sensed by the vibration sensor 80 contains much vibration information (noise) other than information on the vibration of the roller journal bearing 59. In particular, as illustrated in Fig. 5, in the mill 10, vibration due to pulverization of solid fuel is disturbance, and much large vibration other than the vibration of the roller journal bearing 59 is included until the vibration is transmitted from the roller journal bearing 59 to the vibration sensor 80. It is thus preferable to perform processing on a signal received before the control unit 50 performs evaluation of vibration.

The control unit 50 of the present embodiment has a signal amplifier 91, a signal processing device 92, a signal computation device 93, a plant control device 94, and the like. Further, in the solid fuel pulverizing device 100 of the present embodiment, a signal of vibration sensed by the vibration sensor 80 is amplified by the signal amplifier 91 (for example, an amplifier). The amplified signal is then subjected to processing at the signal processing device 92, and disturbance is removed. The processed signal is then calculated at the signal computation device 93, and an anomaly of the roller journal bearing 59 is detected. Further, the degree of an anomaly (degree of damage) of the roller journal bearing 59, a replacement time of the roller journal bearing 59, or the like may be derived by the signal computation device 93. Further, information derived by the signal computation device 93 or the like may be displayed on a display device 95.

The signal computation device 93 transmits derived information to the plant control device 94, and the plant control device 94 controls various devices forming the power plant 1, such as the mill 10, based on the received information. Further, details of control may be displayed on a display device 96.

Next, an example of a signal processing method and a signal computation method performed by the control unit 50 (the signal processing device 92 and the signal computation device 93) will be described with reference to Fig. 6 to Fig. 9.

The control unit 50 first performs filtering. The filtering is a process of removing a signal of a natural frequency of a component forming a transmission path and picking up only a signal of a required frequency band with respect to vibration information detected by the vibration sensor 80. Details of the filtering will be described with reference to Fig. 6. Graph (a) of Fig. 6 represents the temporal change of a signal value detected by the vibration sensor 80. Further, graph (c) of Fig. 6 represents the natural frequency of a component forming a transmission path. Further, graph (b) of Fig. 6 represents a signal value obtained by removing the signal of the natural frequency of the component forming the transmission path from the vibration information detected by the vibration sensor 80. That is, graph (a) is graph (b) plus graph (c) in Fig. 6.

Note that, in the filtering, a signal of a frequency of vibration due to pulverizing of solid fuel may be removed.

Next, the control unit 50 performs enveloping (envelope processing) on a filtered signal value (the signal value illustrated in Fig. 6 (b) and Fig. 7 (a)). The enveloping is a process of removing a signal caused by small vibration due to unevenness of a flaw occurring in the rolling face of the roller journal bearing 59 and converting the signal into an envelope signal representing the external shape of the flaw. With enveloping being performed, each peak of the signal value is simplified as illustrated in Fig. 7 (b).

Next, the control unit 50 performs frequency analysis processing on the enveloped signal value (the signal value illustrated in Fig. 7 (b) and Fig. 8 (a)). For example, the frequency analysis processing is Fast Fourier Transform (FFT) processing, which is a process of organizing signal levels on a frequency basis. With the FFT processing being performed, a distribution of the level of signal values with respect to frequencies is represented as illustrated in Fig. 8 (b).

Next, the control unit 50 performs a process of superimposing a frequency of vibration occurring during damage of the roller journal bearing 59 (specific frequency) and harmonic contents, which are integer multiples thereof, on the FFT-processed signal value (the signal value illustrated in Fig. 8 (b) and Fig. 9 (a)). Note that this specific frequency is a numerical value unique to a bearing, and the theoretical value thereof can be found from the dimension of the bearing (the diameter of the inner wheel, the outer wheel, or the rolling body) and the rotational rate. In detail, this process is a process of driving the mean value of the levels of signal values with respect to a frequency difference X1 and a frequency difference X2 of Fig. 9 (a), respectively. With this process being performed, a distribution of the levels of the signal values with respect to frequency differences is represented as illustrated in Fig. 9 (b). In the present embodiment, an anomaly frequency of the roller journal bearing 59 is near the frequency difference X2. Thus, in the example of Fig. 9 (b), since the signal value of the frequency difference X2 is larger, it can be determined that an anomaly is occurring in the roller journal bearing 59.

In such a way, the control unit 50 (the signal processing device 92 and the signal computation device 93) performs signal processing and calculation. Note that the method of signal processing and calculation is an example and is not limited to the method described above. For example, when it is determined that the noise included in vibration information detected by the vibration sensor 80 is sufficiently small, filtering and enveloping may be omitted.

Next, an example of a method of driving the degree of an anomaly (degree of damage) of the roller journal bearing 59 performed by the control unit 50 (signal processing device 92 and the signal computation device 93) will be described.

Basically, as the lifetime of the roller journal bearing 59 is consumed (that is, as the degree of an anomaly increases), vibration at the specific frequency (the frequency of vibration occurring during an anomaly of the roller journal bearing 59) and vibration at harmonic contents that are integer multiplies thereof increase. The threshold thereof (how far the vibration increases before breakage) is evaluated in the following procedure.

Typically, an anomaly (damage) of the roller journal bearing 59 proceeds gradually as follows. In the following, the degree of an anomaly is described with four divided stages of "creation period", "damage early period", "damage middle period", and "damage later period" in ascending order of the degree of an anomaly. In the creation period, vibration of the frequency range above 10 kHz increases. At this time, although a minute flaw has occurred in the rolling face of the roller journal bearing 59, this can only be visually recognized as a difference in gloss. In the damage early period, vibration of the frequency range around several kHz increases. At this time, a transfer mark has occurred on the rolling face of the roller journal bearing 59. In the damage middle period, vibration of the frequency range of several tens Hz to 1 kHz increases. At this time, initial pealing has occurred on the rolling face of the roller journal bearing 59. In the damage later period, vibration increases in the whole frequency range. At this time, clear pealing has occurred on the rolling face of the roller journal bearing 59.

In such a way, as the degree of an anomaly increases, the frequency range of a detected vibration signal is shifted to the low frequency side. Therefore, when the vibration signal is subjected to frequency analysis, vibration at the specific frequency and vibration at the harmonic contents thereof in each frequency range are processed, respectively, and an increase in vibration at an anomaly frequency in the frequency range is sensed, it can be determined that damage has progressed up to the degree corresponding to the frequency range.

Note that, while the threshold to determine that vibration has increased is preferably set between 0.1 to 10 G in a case of oscillation acceleration based on the specification of a device, the threshold may be a value listed in ISO-10816 or JIS-B-0906 when a general structure is employed.

Note that the status of the roller journal bearing 59 may be displayed on the display device 95, 96, or the like in accordance with the increase in the degree of an anomaly. Specifically, for example, "Normal: Please prepare a proactive spare part." may be displayed during the creation period. Further, "Damage early period: Please purchase a spare part." may be displayed during the damage early period. Further, "Damage middle period: Please schedule replacement." may be displayed during the damage middle period. Further, "Damage later period: Please replace the roller journal bearing" may be displayed during the damage later period.

According to the present embodiment, the following effects and advantages are achieved.

In the present embodiment, the vibration sensor 80 is provided to the journal head 45. Accordingly, for example, compared to a case where the vibration sensor 80 is provided inside the pulverizing roller 13, vibration occurring in the pulverizing roller 13 can be less likely to be transmitted to the vibration sensor 80. Therefore, occurrence of a failure of the vibration sensor 80 due to vibration of the pulverizing roller 13 can be suppressed. Further, the vibration sensor 80 is provided at the tip 48a of the eccentric shaft 48 located outside the housing 11 in the journal head 45. Accordingly, since the vibration sensor 80 is less likely to be affected by the pulverized solid fuel or a high-temperature gas (such as air) inside the housing 11 of the mill 10, occurrence of a failure of the vibration sensor 80 can be suppressed. In such a way, since the vibration sensor 80 can be less likely to fail, the reliability of the vibration sensor 80 can be improved.

Further, the vibration sensor 80 is provided to the tip 48a of the eccentric shaft 48 located outside the housing 11. Accordingly, it is possible to access the vibration sensor 80 without suspending the operation of the mill 10 or disassembling the housing 11 or the pulverizing roller 13. Thus, the replacement or additional installation operation on the vibration sensor 80 can be simplified when the vibration sensor 80 is replaced because of a failure or maintenance, when the vibration sensor 80 is additionally installed to an already-installed mill, or the like. Further, since the mill 10 can be operated even during the replacement or additional installment operation, the availability factor can be improved.

In the present embodiment, the control unit 50 detects an anomaly of the roller journal bearing 59 based on vibration sensed by the vibration sensor 80. When the pulverizing roller 13 pulverizes solid fuel, the pulverizing roller 13 vibrates. The vibration occurring in the pulverizing roller 13 is transmitted to the journal head 45 from the pulverizing roller 13 via the roller journal bearing 59. Thus, when an anomaly occurs in the roller journal bearing 59, vibration transmitted to the journal head 45 changes. Therefore, an anomaly of the roller journal bearing 59 can be detected.

The frequency of vibration occurring when the pulverizing roller 13 pulverizes solid fuel and the natural frequency of a transmission path from the roller journal bearing 59 to the vibration sensor 80 do not change regardless the state of the roller journal bearing 59 (regardless of whether it is normal or abnormal). In the present embodiment, such frequency components that do not change regardless of the state of the roller journal bearing 59 are removed from information on vibration sensed by the vibration sensor 80. Therefore, the accuracy to detect an anomaly of the roller journal bearing 59 can be improved.

In the present embodiment, the control unit 50 performs a process of organizing signal levels on a frequency basis (frequency analysis) on the information on vibration sensed by the vibration sensor 80. This enables more accurate detection of an anomaly of the roller journal bearing 59.

In the present embodiment, the control unit 50 detects the degree of progress of an anomaly of the roller journal bearing 59 based on the information on vibration sensed by the vibration sensor 80. As an anomaly (for example, damage) of the roller journal bearing 59 progresses, vibration of the journal head 45 changes. Thus, the control unit 50 can detect the degree of progress of an anomaly of the roller journal bearing 59.

In the present embodiment, the journal head 45 and the roller journal bearing 59 are joined to each other so as to avoid relative motion. Further, the journal head 45 and the vibration sensor 80 are joined to each other so as to avoid relative motion. Accordingly, the information from the roller journal bearing 59 is less likely to change in the joining part between the journal head 45 and the roller journal bearing 59 and the joining part between the journal head 45 and the vibration sensor 80. Therefore, the information on the roller journal bearing 59 can be suitably sensed by the vibration sensor 80. This enables more accurate detection of an anomaly of the roller journal bearing 59.

[Modified Examples]

Next, modified examples for the present embodiment will be described.

The installation location of the vibration sensor 80 is not limited to the tip 48a of the eccentric shaft 48 and may be any location that is near the roller journal bearing 59, outside the housing 11 of the mill 10, and at a position where the attenuation during transmission of vibration is small. For example, as indicated by the broken line of Fig. 2, in a case of the structure where the base end of the journal shaft 52 (the end opposite to the end where the pulverizing roller 13 is provided) is located outside the housing 11 of the mill 10, the vibration sensor 80 may be provided to the base end of the journal shaft 52.

Further, when a plurality of pulverizing rollers 13 are provided to a single mill 10 and a plurality of roller journal bearings 59 are also provided, it is preferable to install vibration sensors 80 to respective pulverizing rollers 13. This is because the damage status may differ between respective pulverizing rollers 13. Further, the vibration sensor 80 may be installed to only a representative pulverizing roller 13 rather than installing the vibration sensor 80 for each pulverizing roller 13. In such a case, it is desirable to take precautionary measures, such as to replace all the roller journal bearings 59 when a minor anomaly is detected, so that damage of one of the roller journal bearings 59 does not lead to anomalies of the entire mill 10.

Further, when two or more roller journal bearings 59 are installed to a single roller, bearings with different specifications may be used to differentiate specific frequencies occurring during damage of the bearings so that, based on a frequency difference sensed at the vibration sensor 80, it can be estimated which of the roller journal bearings 59 is damaged.

Further, although the vibration sensor 80 is used to detect an anomaly of the roller journal bearing 59 in the present embodiment, the sensor used to detect an anomaly of the roller journal bearing 59 is not limited to a vibration sensor (acceleration sensor). For example, a velocity sensor, a displacement sensor, a strain gage, or an acoustic sensor may be used.

Further, the vibration sensor 80 may be installed so as to be easily replaceable. Further, it is desirable that the vibration sensor 80 be installed so as to be temporarily detachable during maintenance of the mill 10.

Further, although it is preferable to install the vibration sensor 80 so as to be able to sense each vibration in the X-axis direction, the Y-axis direction, and the Z-axis direction (see Fig. 4) occurring from the roller journal bearing 59, some of the directions may be omitted if necessary. Note that, in the present embodiment, the X-axis direction is the extending direction of the journal shaft 52, the Y-axis direction is the vertical direction, and the Z-axis direction is the extending direction of the eccentric shaft 48, as described above. Further, the vibration sensor 80 may sense vibration in only a single direction or may detect vibration in a plurality of directions as with the present embodiment. Since various types of vibration can be sensed if the vibration sensor 80 can sense vibration in at least two different directions, detection accuracy for an anomaly of the roller journal bearing 59 can be improved at the control unit 50. Further, it is more preferable that the two different directions be directions orthogonal to each other.

Further, typically, a flaw in the rolling face is transmitted as vibration when the roller journal bearing 59 carries a load on the bottom side, that is, the pulverizing unit side of the roller journal bearing 59. For example, when the vibration sensor 80 is used, the vibration caused by damage of the bearing occurs as vertical displacement. Thus, the vibration is transmitted as vertical vibration through the journal shaft 52, deflected by 90 degrees at the journal head 45, and transmitted to and sensed by the vibration sensor 80 at the tip 48a of the eccentric shaft 48 as tortional vibration (vibration displacing in the X-axis and Y-axis directions). Therefore, the sensor that senses vibration in the Z-axis direction (the second sensor 80b) is less important than the sensors that sense vibration in the X-axis and Y-axis directions (the first sensor 80a and the third sensor 80c). Thus, when some of the vibration sensors 80 is omitted, the second sensor 80b may be omitted first. Note that output values from respective sensors may be calculated separately or may be summed on the way.

Further, the vibration sensor 80 may be provided with a cover for waterproof, dustproof, explosion-proof, or the like. When such a cover is provided, however, it is preferable to provide the cover so as not to affect sensing of signals.

Further, the path from the vibration sensor 80 to the control unit 50 may be wired with a shield cable, an optical cable, or the like that are less likely to be affected by external noise.

Further, the anomaly sensing system may be a stationary monitoring instrument to perform continuous measurement or may employ spot measurement to perform temporary measurement when necessary. When spot measurement is employed, it is preferable to suitably set a timing to perform measurement. For example, it may be possible to apply measurement at start of initial use of the roller journal bearing 59 (when it is new) to take basic data and then take data at a timing that the remaining lifetime decreases after a certain period of use. In the case of spot measurement, however, it may be not possible to sense sudden deterioration of the state of the roller journal bearing 59 occurring when no measurement is performed, and therefore, the anomaly sensing system is more preferably the stationary type.

Further, when spot measurement is performed, it is preferable to perform the spot measurement with the same operation conditions (the type of solid fuel used, the feed amount of solid fuel, or the like) of the mill 10 as much as possible. By doing so, it is possible to suppress variation due to a difference in operation conditions of the mill 10 and improve determination accuracy of a bearing anomaly. In a case of the stationary type, it is preferable that the anomaly sensing system be configured to accumulate data for each detection condition to automatically set an anomaly determination threshold for each operation condition.

Further, the order of application of signal processing performed by the control unit 50 may be changed as appropriate taking the operation state of the mill 10 into account to the extent that it does not depart from the purpose. Further, additional processing other than the processing described above may be added. For example, when the natural frequency of a component forming a vibration transmission path matches only a particular harmonic content (N-th) out of frequencies of vibration occurring during an anomaly of the roller journal bearing 59, a process may be applied to exclude the signal in the frequency range including the particular harmonic from signals to be evaluated.

Further, a standard value estimated from the past operation performance data may be used for the threshold for bearing anomaly determination. Further, Maharanobis Taguchi System (MT method) may be used to obtain a trend of change to implement anomaly sensing determination. Note that, since a vibration information signal changes in accordance with operation conditions of the mill 10, it is preferable to change the anomaly determination threshold in accordance with the operation conditions of the mill 10.

Further, when the control unit 50 determines that an anomaly is sensed, information on the anomaly sensing may be displayed on the display device 96 of the plant control device 94. Further, in response thereto, change of the operation conditions of the mill 10 (for example, operation of reducing the fuel feed amount or the like), detailed inspection of the roller journal bearing 59, replacement thereof, arrangement of components, or the like may be implemented. Note that the device on which the information is displayed is not limited to the plant control device 94, and the information may be transmitted to a registered information terminal such as a personal computer or a smartphone by e-mail or the like. Further, only on-site display may be employed. When the anomaly sensing system is a system independent of the plant control device 94, modification of the plant control device 94 can be omitted.

Further, a system that communicates information to a manufacturer (a production supplier of the mill 10) when the control unit 50 determines that an anomaly is detected may be provided. When receiving anomaly determination information, the manufacturer may make a suitable proposal (precise diagnosis, purchase of components, coordination of construction schedules, or the like) to the user (the user of the mill 10). Further, the information may be communicated to a third party other than the manufacturer and the user, for example, may be communicated to a bearing manufacturer to adjust a bearing production quota, or may be communicated to a maintenance company and used to secure maintenance budget or the like.

[Second Embodiment]

Next, a second embodiment of the present disclosure will be described. The present embodiment differs from the first embodiment in that the control unit 50 includes a remaining lifetime estimate system. Since other features are the same as those in the first embodiment, the same configurations are labeled with the same references, and the detailed description thereof will be omitted.

The remaining lifetime estimation system according to the present embodiment is configured as follows, for example.

The control unit 50 estimates the remaining lifetime of the roller journal bearing 59. That is, the control unit 50 has a function as the remaining lifetime estimation system for the roller journal bearing 59 of the pulverizing roller 13 that pulverizes solid fuel between the pulverizing roller 13 and the pulverizing table 12. Note that the function as the remaining lifetime estimation system may be provided to a control device separate from the control unit 50.

Fig. 10 is a diagram illustrating an example of the hardware configuration of the control unit 50 according to the present embodiment.

As illustrated in Fig. 10, the control unit 50 is a computer system (computing system) and includes, for example, a CPU 111, a read only memory (ROM) 121 for storing a program or the like executed by the CPU 111, a random access memory (RAM) 130 functioning as a work area during execution of each program, a hard disk drive (HDD) 140 as a mass storage device, and a communication unit 150 for connecting to a network or the like. These units are connected to each other via a bus 180.

Further, the control unit 50 may include an input unit formed of a keyboard, a mouse, or the like, a display unit formed of a liquid crystal display device or the like to display data, or the like.

Note that the storage medium for storing a program or the like executed by the CPU 111 is not limited to the ROM 121. For example, the storage medium may be other auxiliary storage devices such as a magnetic disk, a magnetic optical disk, a semiconductor memory, or the like.

The process of a series of processes for implementing various functions described later is stored in the HDD 140 or the like in a form of a program, and the various functions described later are implemented when the CPU 111 loads such a program into the RAM 130 or the like to perform modification or computation processing on information. Note that, for a program, a form in which the program is installed in advance in the ROM 121 or another storage medium, a form in which the program is provided in a state of being stored in a computer readable storage medium, a form in which the program is delivered via a wired or wireless communication connection, or the like may be applied. The computer readable storage medium may be a magnetic disk, a magnetic optical disk, a CD-ROM, a DVD-ROM, a semiconductor memory, or the like. Further, the HDD 140 may be replaced with a solid state disk (SSD) or the like.

Fig. 11 is a function block diagram illustrating the function of the control unit 50 related to remaining lifetime estimation. As illustrated in Fig. 11, the control unit 50 includes an acquisition unit 62 and an estimation unit 63.

The acquisition unit 62 acquires a measurement value of information about a load applied to the pulverizing roller 13 and a measurement value of information about an inclination angle of the pulverizing roller 13 relative to the pulverizing table 12. The acquisition unit 62 has acquired measurement values of information about a load applied to the pulverizing roller 13 and information about an inclination angle of the pulverizing roller 13 relative to the pulverizing table 12, which are important for reflecting the actual operation state to the remaining lifetime estimation of the roller journal bearing 59.

The information about a load applied to the pulverizing roller 13 is information about the load L2 received by the pulverizing roller 13 from the pulverizing table 12, as illustrated in Fig. 12. The load L2 from the pulverizing table 12 is force (load) received from the pulverizing table 12 when the pulverizing roller 13 is pressed against solid fuel fed and pulverized on the top face of the pulverizing table 12. That is, the load L2 is force received by the pulverizing roller 13 in a direction orthogonal to a contact face between the pulverizing table 12 and the pulverizing roller 13 or to a proximate facing surface when the smallest clearance between the pulverizing roller 13 and the pulverizing table 12 is set. The load L2 from the pulverizing table 12 acts along the axis AX1 parallel to the rotation axis of the pulverizing table 12 (for example, in the rotation axis direction). Note that the shape of the pulverizing table 12 in Fig. 12 is an example, and the shape is not limited thereto.

In the present embodiment, description will be provided with a case where an application load applied by the pressing device 46 (pressing force to press the pulverizing roller 13 against the pulverizing table 12 via solid fuel to be pulverized), that is, the hydraulic load L1 of the hydraulic load unit 54 is acquired as the information about a load applied to the pulverizing roller 13. The hydraulic load (application load) L1 is a parameter controlled when the pulverizing roller 13 is controlled and pressed against the pulverizing table 12, and the actual measurement thereof is measured by an installed sensor and output to the acquisition unit 62. For example, a pressure sensor such as a load cell or a pressure sensitive sensor can be used as the sensor. Note that any parameter is applicable as the information about a load applied to the pulverizing roller 13 as long as the parameter is about the load applied to the pulverizing roller 13 without being limited to the hydraulic load (application load) L1. For example, a load applied to the pulverizing roller 13 or a load applied to the roller journal bearing 59 may be directly measured and acquired by a sensor.

The information about an inclination angle of the pulverizing roller 13 relative to the pulverizing table 12 is information about the roller inclination angle θ, as illustrated in Fig. 13 (a partial enlarged longitudinal sectional view illustrating a roller inclination angle). The roller inclination angle θ is an inclination of the pulverizing roller 13 relative to the pulverizing table 12, which is an angle formed between the axis AX1 in the rotation axis direction (or the axis parallel to the rotation axis) of the pulverizing table 12 and the axis AX3 orthogonal to (a face orthogonal to) the rotation axis AX2 of the pulverizing roller 13.

In the present embodiment, the lift amount X of the pulverizing roller 13 is used as the information about the inclination angle of the pulverizing roller 13 relative to the pulverizing table 12. The lift amount X of the pulverizing roller 13 is the distance between the pulverizing table 12 and the pulverizing roller 13. The lift amount X is a distance occurring due to solid fuel to be pulverized being present between the pulverizing table 12 and the pulverizing roller 13. Since the pulverizing roller 13 is pivoted about the eccentric shaft 48, the lift amount X is the distance between the pulverizing table 12 and the pulverizing roller 13 when the pulverizing roller 13 moves vertically with respect to the eccentric shaft 48. In the present embodiment, the lift amount X is acquired by a gap sensor as illustrated in Fig. 15, for example. The lift amount X may be acquired by a linear motion sensor, a capacitive distance sensor, a laser distance sensor, or the like. In Fig. 7, a measurement bar 71 and a gap sensor 72 are provided to the eccentric shaft 48. The measurement bar 71 is rotated with rotation of the eccentric shaft 48 (rotation of the pulverizing roller 13). The gap sensor 72 has a stationary installed position and measures the distance between the gap sensor 72 and the measurement bar 71. In Fig. 14 and Fig. 15, the ratio between the distance L between the central axis (AX3) of the pulverizing roller 13 and the eccentric shaft 48 and the lift amount X is equal to the ratio between the length 1 of the measurement bar 71 and the gap value x in the gap sensor 72. Thus, the lift amount X can be calculated by the gap sensor 72 from Equation (1) below.
[Math. 1]

$$X = x \times \frac{L}{l} \qquad (1)$$

Note that, in Equation (1), since L and 1 are designed values and x can be acquired by the gap sensor 72, the lift amount X can be calculated. Note that the measurement of the lift amount X may be calculated from a moving amount of the pressing device 46, for example, the motion amount of the intermediate piston 53 or may be measured directly when the lift amount X can be measured.

The acquisition unit 62 may acquire the lift amount X or may acquire the gap value x that is the output of the gap sensor 72. Further, when a limit is provided to the motion amount of the pulverizing roller 13 by a protruding part 57 and a stopper 58 and a clearance is provided between the pulverizing roller 13 and the pulverizing table 12, the point at which the gap value x is 0 (zero) may be defined as a point at which the clearance between the pulverizing roller 13 and the pulverizing table 12 is the smallest, and similarly, the point at which the gap value x is 0 (zero) of the gap sensor 72 may be defined as a point at which the distance between the gap sensor 72 and the measurement bar 71 is the smallest.

Note that, although the lift amount X of the pulverizing roller 13 is used as the information about the inclination angle of the pulverizing roller 13 relative to the pulverizing table 12 in the present embodiment, any information that is about the roller inclination angle θ can be used without being limited to the lift amount X of the pulverizing roller 13. Further, the roller inclination angle θ may be directly measured and acquired by a sensor or the like. Further, in the present embodiment, the roller inclination angle θ is calculated from the lift amount X of the pulverizing roller 13, and a thrust load Ls and a radial load Lr are calculated and used for the remaining lifetime estimation. As described later, however, if the lift amount X of the pulverizing roller 13 is acquired, calculation of the thrust load Ls and the radial load Lr or the remaining lifetime estimation may be performed without calculation of the roller inclination angle θ. In such a case, the acquisition unit 62 acquires a measurement value of information about the load applied to the pulverizing roller 13 and a measurement value of information about the lift amount X of the pulverizing roller 13 relative to the pulverizing table 12 are acquired. Any information that is about the lift amount X can be used as the information about the lift amount X of the pulverizing roller 13 relative to the pulverizing table 12 without being limited to the lift amount X.

The estimation unit 63 estimates the remaining lifetime of the roller journal bearing 59 based on information acquired at the acquisition unit 62. Specifically, the estimation unit 63 calculates the radial load Lr and the thrust load Ls applied to the roller journal bearing 59 and estimates the remaining lifetime of the roller journal bearing 59 based on the radial load Lr and the thrust load Ls.

Fig. 12 is a diagram (partial enlarged longitudinal sectional view) illustrating the relationship between respective loads around the pulverizing roller 13. As illustrated in Fig. 12, since the pulverizing roller 13 is pressed against the pulverizing table 12 by the hydraulic load L1, the load L2 from the pulverizing table 12 is applied to the pulverizing roller 13. Solid fuel to be pulverized may be present between the pulverizing roller 13 and the pulverizing table 12. Further, the load L2 from the pulverizing table 12 is also applied to the roller journal bearing 59 via the pulverizing roller 13. By decomposing the load L2 received by the roller journal bearing 59 into the radial component and the thrust component, it is possible to calculate the radial load Lr and the thrust load Ls at the roller journal bearing 59. The estimation unit 63 estimates the remaining lifetime of the roller journal bearing 59 from the radial load Lr and the thrust load Ls. Note that a known method can be used for the method of using the radial load Lr and the thrust load Ls to estimate the lifetime of the roller journal bearing 59.

Specifically, the hydraulic load L1 and the lift amount X acquired at the acquisition unit 62 are input to the estimation unit 63. Note that the gap value x may be input to the estimation unit 63, and the lift amount X may be calculated by the calculation described above. The estimation unit 63 calculates the load L2 received by the roller journal bearing 59 from the pulverizing table 12 based on the input hydraulic load L1. Since the pulverizing roller 13 is pressed against the pulverizing table 12 based on the hydraulic load L1 via solid fuel to be pulverized, there is a correlation between the hydraulic load L1 and the load L2 from the pulverizing table 12. Thus, from the hydraulic load L1, the estimation unit 63 can calculate the load L2 applied from the pulverizing table 12. Note that, when the load L2 from the pulverizing table 12 can be directly acquired at the acquisition unit 62 by a measuring instrument with various sensors, the acquired load L2 from the pulverizing table 12 may be used. Further, when the load L2 is calculated from the hydraulic load L1, a load due to the dead weight of the pulverizing roller 13 and a member supporting the pulverizing roller 13 may be taken into account in addition to the hydraulic load L1.

The estimation unit 63 then calculates the roller inclination angle θ based on the input lift amount X. The roller inclination angle θ is calculated from Equation (2) below.

[Math. 2]

$$\theta = \theta_0 - \Delta\theta = \theta_0 - \tan^{-1}\left(\frac{X}{L}\right) \qquad (2)$$

As illustrated in Fig. 13, in Equation (2), $\theta_0$ is the roller inclination reference angle, which is the roller inclination angle θ when the lift amount X is 0 (zero) (that is, a state where the pulverizing roller 13 and the pulverizing table 12 are in contact with each other or the clearance between the pulverizing roller 13 and the pulverizing table 12 is the smallest). Further, Δθ is a change amount of the roller inclination angle θ relative to the roller inclination reference angle, and Δθ is a value of an inverse tangent function of the ratio between the lift amount X and the distance L. That is, a smaller lift amount X results in a larger roller inclination angle θ, and as the lift amount X increases, the roller inclination angle θ decreases.

As discussed above, in the estimation unit 63, once the load L2 from the pulverizing table 12 and the roller inclination angle θ are calculated, the thrust load Ls and the radial load Lr are calculated as with the relationship in Fig. 14. The thrust load Ls is calculated by multiplying the load from the pulverizing table 12 by sin (θ), and the radial load Lr is calculated by multiplying the load from the pulverizing table 12 by cos (θ).

In such a way, at the estimation unit 63, the thrust load Ls and the radial load Lr applied to the roller journal bearing 59 are calculated, and the remaining lifetime estimation is performed based on the thrust load Ls and the radial load Lr. Various methods are applicable for the method of remaining lifetime estimation as long as they are based on the thrust load Ls and the radial load Lr.

Next, an example of the remaining lifetime estimation process performed by the control unit 50 described above will be described with reference to Fig. 16. Fig. 16 is a flowchart illustrating an example of the procedure of the remaining lifetime estimation process according to the present embodiment. The flow illustrated in Fig. 16 is performed when a start instruction for remaining lifetime estimation is provided from an operator or the like, for example. Note that the remaining lifetime estimation process may be periodically performed without a start instruction from the operator or the like.

First, actual measurements of the hydraulic load L1 and the lift amount X are acquired (S101).

Next, the roller inclination angle θ is calculated based on the lift amount X (S 102).

Next, the radial load Lr and the thrust load Ls applied to the roller journal bearing 59 are calculated (S103).

Next, the radial load Lr and the thrust load Ls are used to estimate the remaining lifetime of the roller journal bearing 59 (S 104). Note that, for estimation of the remaining lifetime, information other than the radial load Lr and the thrust load Ls (for example, designed value of the roller journal bearing 59 or the like) can be used in accordance with an estimation method.

Next, the advantageous effects achieved by the remaining lifetime estimation process described above will be described with reference to Fig. 17. Fig. 17 illustrates the change in the power plant loading and the load applied to the journal bearing with operating time and the change in the remaining lifetime with operating time. Fig. 17 illustrates, as a reference example, a case where the remaining lifetime is estimated assuming that the maximum load is continued to be applied as a designed value.

In the reference example, it is assumed that, when the power plant 1 is assumed to be operated at a loading of the rated load (for example, 100% loading), the load applied to the roller journal bearing 59 is also the largest in proportion to the loading of the power plant 1. Thus, the remaining lifetime decreases linearly with operating time, and it is estimated that operating time T2 in Fig. 17 is the time when maintenance is needed.

In contrast, in the present embodiment, since the load related to the pulverizing roller 13 is sequentially measured as the hydraulic load L1, the load applied to the roller journal bearing 59 corresponding to the actual operation state of the power plant 1 can be acquired. The actual load may be lower than the maximum load as with the actual load applied to the roller journal bearing 59 (line graph) in Fig. 17. Thus, when the remaining lifetime is estimated taking the actual measurement of the roller inclination angle θ into consideration, the reduction in the remaining lifetime with operating time is slower than in the reference example. In particular, in the period Ta of Fig. 17, since the load applied to the roller journal bearing 59 is lower, the remaining lifetime consumption is smaller. Note that the period Ta changes in accordance with the operation state and thus is not limited to the period illustrated in Fig. 17.

For example, when the current point is defined as operating time T1 in Fig. 17, the time when maintenance is needed can be estimated to be operating time T3 by linear extension of the remaining lifetime trend from the present by a predetermined past period.

According to the remaining lifetime estimation of the present embodiment, the remaining lifetime of the roller journal bearing 59 can be more precisely estimated in accordance with the actual operation state. Thus, more accurate estimation of the time when maintenance is needed can be made than in the reference example (the operating time is T2 < T3), and this enables more efficient operation of the mill 10.

Note that, although the actual measurements of the hydraulic load L1 and the lift amount X are used to estimate a remaining lifetime in the present embodiment, the actual measurement of the rotational rate of the roller journal bearing 59 (the rotational rate of the pulverizing roller 13) may also be used to estimate the remaining lifetime. In such a case, the acquisition unit 62 acquires an actual measurement of information about the rotational rate of the roller journal bearing 59, and the estimation unit 63 estimates the remaining lifetime also taking the actual measurement of information about the rotational rate of the roller journal bearing 59 into account. For example, if a slippage phenomenon of the pulverizing roller 13 occurs on solid fuel pulverized on the pulverizing table 12, the rotational rate of the roller journal bearing 59 would decrease or stop. Thus, a rotational rate sensor that senses the actual rotational rate of the roller journal bearing 59 may be installed to take the actual measurement of the rotational rate into account during estimation of a remaining lifetime. By taking the actual measurement of the rotational rate of the roller journal bearing 59 into consideration, it is possible to further improve the estimation accuracy compared to a case where the remaining lifetime is estimated assuming a constant rotational rate of the roller journal bearing 59. For example, as the sensor, a rotational rate sensor or an acceleration sensor that captures a gravity direction change or centrifugal force may be used other than a rotational position sensor such as a rotary encoder. Further, for the method of transferring measured information to outside of the mill 10, the measured information may be transferred via a wired communication unit or may be transferred by using some wireless communication unit.

Note that, although the actual measurements of the hydraulic load L1 and the lift amount X are used to estimate a remaining lifetime in the present embodiment, the state of a lubricant of the roller journal bearing 59 may also be used to estimate the remaining lifetime. In such a case, the acquisition unit 62 acquires the actual measurement of information about the state of the lubricant of the roller journal bearing 59, and the estimation unit 63 estimates the remaining lifetime also taking the actual measurement of information about the state of the lubricant of the roller journal bearing 59 into account. For example, when fine powder particles of pulverized solid fuel are mixed into the lubricating oil inside the box of the roller journal bearing 59 of the pulverizing roller 13, the lifetime of the roller journal bearing 59 may be extremely short. Thus, for example, a sensor that senses the state (contamination, deterioration, or the like) of the lubricating oil as the state of the lubricant may be installed inside the box of the roller journal bearing 59, and the effect caused by the state of the lubricating oil may be taken into account during estimation of the remaining lifetime. By also taking the state of the lubricant into account, it is possible to further improve the estimation accuracy of the remaining lifetime. Most of the causes of contamination of the lubricant is pollution due to entry of fine powder particles pulverized from solid fuel through the seal part (oil seal part) of the pulverizing roller 13. Further, since the cause of entry of fine powder particles is often due to lack of the seal air pressure of a seal part, a sensor that senses a change in the seal air pressure may be installed, and the effect caused by lack of the seal air pressure may be taken into account during estimation of a remaining lifetime.

As described above, according to the remaining lifetime estimation system, the solid fuel pulverizing device, the remaining lifetime estimation method, and the remaining lifetime estimation program according to the present embodiment, information about a load applied to the pulverizing roller 13 and information about the inclination angle of the pulverizing roller 13 relative to the pulverizing table 12 are acquired as measurement values to estimate remaining lifetime of the roller journal bearing 59. This enables countermeasures taking the effect on the remaining lifetime estimation into consideration against fluctuation of the operation state of the mill 10 having the pulverizing roller 13 and can improve the estimation accuracy of the remaining lifetime. Note that, according to the lift amount X of the pulverizing roller 13 relative to the pulverizing table 12, it is possible to estimate the direction of the load applied to the roller journal bearing 59, and it is therefore possible to estimate the remaining lifetime of the roller journal bearing 59 by using the lift amount X of the pulverizing roller 13.

Further, because the remaining lifetime is more accurately estimated, it is possible to implement maintenance (replacement or the like) of the roller journal bearing 59 at more suitable timing. That is, since the roller journal bearing 59 can be used longer, the maintenance frequency of the mill 10 can be reduced. Thus, the maintenance cost can be reduced. Further, the availability factors of the mill 10 and the power plant 1 can be improved.

[Modified Example 1]

Next, a remaining lifetime estimation system, a solid fuel pulverizing device, a remaining lifetime estimation method, and a remaining lifetime estimation program according to modified examples for the second embodiment of the present disclosure will be described.

In the present modified example, the trend of change of a future remaining lifetime is estimated. The remaining lifetime estimation system, the solid fuel pulverizing device, the remaining lifetime estimation method, and the remaining lifetime estimation program according to the present modified example will be described below mainly for features different from those in the second embodiment.

As illustrated in Fig. 18, the control unit 50 in the present modified example includes a prediction unit 64.

The prediction unit 64 predicts a future trend of remaining lifetime trend from a trend of a remaining lifetime estimated by the estimation unit 63 based on a database in which operation states of the mill 10 and the remaining lifetime trend characteristics corresponding to the operation states are accumulated in advance. The remaining lifetime estimation characteristic is information indicating a characteristic of the remaining lifetime shifted in accordance with an operation state, specifically, which is a curve characteristic (which may be a straight line) as indicated by A, B, and C in Fig. 19. That is, the database stores operation information up to the past or present on the mill 10. The database may store operation data up to the past or present on the mill 10 subjected to lifetime estimation or may store past operation data on another mill 10 having a similar configuration. Further, the database may store not only actual operation data but also virtually simulated data. The database may be provided in the control unit 50 (storage unit) or may be provided in a separate device. The operation state includes at least any one of a type of solid fuel (coal type information), a feed amount of solid fuel (coal feed amount), information about a load applied to the pulverizing roller 13 (hydraulic load), a rotational number (classifier rotational number) of a classifier (the rotary classifier 16) provided to the mill 10, and a differential pressure between a gas flowing into the mill 10 and a gas discharged out of the mill 10 (a differential pressure inside the mill 10, which is an index indicating the loading status of the mill 10; for example, which occurs between the upper atmosphere and the lower atmosphere of the pulverizing table 12). Note that any parameter that affects the lifetime of the roller journal bearing 59 may be included as the operation state without being limited to the above. Further, if the matching between changes of the remaining lifetime with operating time for similar operation states is within ±10%, more preferably within ±5% except for operation information (estimated remaining lifetime) apparently determined to be unusual, for example, data on such operation states may be determined to be similar with higher priority out of the data on similar operation states.

Specifically, the prediction unit 64 references the database to select data on an operation state similar to the operation state of the mill 10 subjected to the remaining lifetime estimation and select and acquire a remaining lifetime trend characteristic corresponding to the data on the similar operation state. The data on the similar operation data is data on operation states estimated to have similar remaining lifetime influences for the operation state of the mill 10 subjected to the remaining lifetime estimation. For example, when the type of solid fuel is used as the operation state, the operation state including that of solid fuel assumed to have similar effect in terms of the remaining lifetime influence is the similar operation state for the solid fuel of the mill 10 subjected to the remaining lifetime estimation. Note that, in each parameter of operation states, priority in similarity determination may be set, and the similarity determination may be performed on a parameter (for example, the type of solid fuel) with high priority.

Fig. 19 represents an example in which remaining lifetime trend characteristics of similar operation states are selected for the mill 10 subjected to the remaining lifetime estimation. Fig. 19 illustrates an example in which characteristic A, characteristic B, and characteristic C are selected as the remaining lifetime trend characteristics. Further, Fig. 19 indicates estimation results E1 (first estimation result), E2 (second estimation result), and En (n-th estimation result) that are estimation results of remaining lifetimes for the mill 10 subjected to the remaining lifetime estimation.

The prediction unit 64 determines remaining lifetime trend characteristics (A, B, C) having trend characteristics similar to trend characteristic E based on estimation results from the remaining lifetime estimation results E1 to En for the mill 10 subjected to the remaining lifetime estimation out of the selected remaining lifetime trend characteristics (A, B, C). In the example of Fig. 19, characteristic B is determined, because the trend characteristic from E1 to En is similar to characteristic B. Thus, in the mill 10 subjected to the remaining lifetime estimation, it is estimated that the remaining lifetime characteristic with operating time will have a trend as with characteristic B in the future and reach the lifetime end time Tb. Since it is possible to predict the future remaining lifetime trend taking the operation state of the mill 10 into account by referencing trend characteristic E to the database up to the past or present in such a way, it is possible to more accurately estimate the remaining lifetime. Trend characteristic E of the estimation result of the remaining lifetime for the mill 10 subjected to the remaining lifetime estimation may be a trend characteristic from completion of construction to the present, may be a trend characteristic of a predetermined past period from the present, or may be a trend characteristic with a selected period in which the operation state significantly changed (for example, the type of solid fuel changed).

Note that, even when there is no complete correspondence between a trend characteristic of an estimation result of the remaining lifetime on the mill 10 subjected to the remaining lifetime estimation and the selected remaining lifetime trend characteristics as with the example of Fig. 19, a similar trend characteristic can be selected out of the selected remaining lifetime trend characteristics. Further, when, in the database up to the past or present, there is no trend characteristic similar to the trend characteristic of the estimation result of the remaining lifetime for the mill 10 subjected to the remaining lifetime estimation among the selected remaining lifetime trend characteristics, prediction may be performed based on the selected remaining lifetime trend characteristics. For example, in Fig. 19, when the trend characteristic of the estimation result of the remaining lifetime for the mill 10 subjected to the remaining lifetime estimation is located between characteristic A and characteristic B at a ratio of the difference from the characteristic A side and the difference from the characteristic B side, the future remaining lifetime trend of the mill 10 subjected to the remaining lifetime estimation may be predicted based on characteristic A and characteristic B. In such a case, for example, an intermediate line between characteristic A and characteristic B is created at a proportional ratio between the difference from the characteristic A side and the difference from the characteristic B side to perform remaining lifetime trend prediction.

Note that the process performed by the prediction unit 64 (selection of similar operation states in the database, selection of remaining lifetime trend characteristics having a trend characteristic similar to the trend characteristic of a remaining lifetime estimation result on the mill 10 subjected to the remaining lifetime estimation in the selected remaining lifetime trend characteristics, or prediction of a future remaining lifetime trend based on the selected remaining lifetime trend characteristics) may be processed with an algorithm set in advance or may be suitably processed using AI.

As described above, according to the remaining lifetime estimation system, the solid fuel pulverizing device, the remaining lifetime estimation method, and the remaining lifetime estimation program according to the present embodiment, based on a database in which operation states and remaining lifetime trend characteristics are associated with each other, a more future trend of the remaining lifetime than a trend of the remaining lifetime estimated by the estimation unit 63 can be predicted. It is possible to more accurately predict the future trend of the remaining lifetime, and it is possible to implement maintenance (replacement or the like) of the roller journal bearing 59 at more suitable timing. That is, since the roller journal bearing 59 can be used longer, the maintenance frequency of the mill 10 can be reduced. Thus, the maintenance cost can be reduced. Further, the availability factors of the mill 10 and the power plant 1 can be improved.


[Modified Example 2]


Next, a remaining lifetime estimation system, a solid fuel pulverizing device, a remaining lifetime estimation method, and a remaining lifetime estimation program according to modified examples for the second embodiment of the present disclosure will be described.

In the present modified example, a maintenance plan is created based on an estimated remaining lifetime. The remaining lifetime estimation system, the solid fuel pulverizing device, the remaining lifetime estimation method, and the remaining lifetime estimation program according to the present modified example will be described below mainly for features different from those in the second embodiment and modified example 1 for the second embodiment.

As illustrated in Fig. 20, the control unit 50 in the present modified example includes a planning unit 65.

The planning unit 65 performs maintenance planning based on an estimated remaining lifetime. Specifically, from a remaining lifetime estimated by the estimation unit 63 or a remaining lifetime estimated by the prediction unit 64, it is determined what time in the future the lifetime will be completely consumed, and the planning unit 65 performs maintenance planning. Note that, since a remaining lifetime can be more accurately estimated as described above, it is possible to make a plan with a suitable margin before a lifetime is completely consumed.

For example, the planning unit 65 performs maintenance planning a predetermined period in advance of an estimated lifetime end time. The predetermined period is set based on a period required for performing maintenance with safe and efficient steps such as a period required from arrangement of the roller journal bearing 59 to replacement thereof, for example. In the maintenance planning, for example, a plan is made including at least one of a maintenance time, an operation strategy for adjusting a maintenance time, and loading distribution adjustment in a plurality of mills 10.

The maintenance time is a time (recommended time) to replace the roller journal bearing 59, which is set based on the estimated remaining lifetime. For example, the maintenance time is set taking a predetermined margin into account with respect to an estimated lifetime end time.

The operation strategy for adjusting a maintenance time is an operation strategy for the mill 10, which is for adjusting a maintenance time. For example, when the maintenance time has already been set and is later than an estimated lifetime end time, an operation strategy for extending the lifetime is planned. Specifically, a change of the type of solid fuel, alleviation of the fineness at which solid fuel is pulverized, or the like may be planned. With a suitable operation state, the lifetime can be extended with more safe and efficient steps, and maintenance can be performed at a suitable time. Note that, when the maintenance time set in advance is earlier than an estimated lifetime end time, an operation strategy to increase the loading so as not to increase the margin of the remaining lifetime may be planned to make the most of the remaining lifetime.

The loading distribution adjustment in a plurality of mills 10 is to suitably adjust the loading distribution between a plurality of provided mills 10. For example, adjustment of a loading distribution of each mill 10 is planned for causing maintenance times of the plurality of mills 10 to be the same, setting the maintenance times stepwise (for example, causing maintenance intervals to be the same between the plurality of mills 10), or the like. For example, when the lifetime end point of one mill 10 of the plurality of mills 10 is earlier than the remaining mills 10, it is possible to adjust the lifetime end points of the plurality of mills 10 to be the same by reducing the loading of the one mill 10 and increasing the loadings of the remaining mills 10.

Fig. 21 is an example of a system according to a maintenance planning. As illustrated in Fig. 21, remaining lifetime estimation information on the mill 10 is aggregated in an information aggregation system 101 on the user side, and information aggregated in the aggregation system is acquired by the server 102 on a device manufacturer side to perform planning by the planning system 103 and make a proposal to the user. Note that, although Fig. 21 illustrates a case as an example where the planning unit 65 is provided on the device manufacturer side as the planning system 103, the planning unit 65 may be provided on the user's solid fuel pulverizing device side.

As described above, according to the remaining lifetime estimation system, the solid fuel pulverizing device, the remaining lifetime estimation method, and the remaining lifetime estimation program according to the present embodiment, it is possible to make a plan with a margin for the time to set maintenance by performing maintenance planning in accordance with an estimated remaining lifetime. Thus, the availability factors of the mill 10 and the power plant 1 can be improved.

Next, an example of a method of using the anomaly sensing system and the remaining lifetime estimation system for the roller journal bearing 59 in combination will be described with reference to Fig. 22.

Fig. 22 illustrates the estimated remaining lifetime and the degree of an anomaly (degree of progress of damage) of the roller journal bearing 59 with the time course. Further, the one-dot chain line represents the trend of the remaining lifetime of the roller journal bearing 59 found at a set loading. Further, the solid line represents the trend of the remaining lifetime found from an actual loading by the remaining lifetime estimation system. Further, the broken line represents the level of an anomaly signal detected by the anomaly sensing system (a signal at the bearing anomaly frequency in a predetermined frequency range). Time t1 indicates that the remaining lifetime found at the set loading becomes zero (that is, the designed lifetime). The difference at t1 from the remaining lifetime found from the actual loading by the remaining lifetime estimation system (difference D in the remaining lifetime) indicates a margin for a case if the bearing were replaced at the end of the designed lifetime. Further, time t3 is a timing that the roller journal bearing 59 becomes disabled due to damage thereof, that is, indicates the actual lifetime. Time t2 is a replacement timing derived by using the detection result from the anomaly detection system.

As described above, the combined use of the anomaly sensing system and the remaining lifetime estimation system enables the use of the roller journal bearing 59 to be continued even in a region with a shorter margin compared to a case where only the remaining lifetime estimation system is used.

According to the present embodiment, the following effects and advantages are achieved.

In general, although an increase in vibration of the roller journal bearing 59 can be known in anomaly detection systems, the explicit threshold for the increase in vibration at which the roller journal bearing 59 becomes disabled may be basically uncertain before an actual device of the roller journal bearing 59 is once used until becoming disabled and the signal trend before the bearing becomes disabled is observed. However, since it takes a long time to conduct a test until the bearing is damaged in the actual device, there is a problem that extension of the lifetime of the roller journal bearing 59 is difficult to achieve only with the anomaly detection system.

In contrast, with the combined use of the anomaly sensing system and the remaining lifetime estimation system for the roller journal bearing 59 as with the present embodiment, it is possible to monitor the roller journal bearing 59 by using the remaining lifetime estimation system for regular lifetime consumption and using the anomaly sensing system for anomaly sensing. This makes it possible to extend the lifetime while ensuring the reliability of the roller journal bearing 59.

In detail, the remaining lifetime estimation system evaluates the remaining lifetime of the roller journal bearing 59 from the operational information on the pulverizing roller 13 (for example, a load acting on the pulverizing roller 13 or the rotational rate of the pulverizing roller 13) as described above, that is, visualizes "fatigue lifetime" of the roller journal bearing 59. This is to evaluate "calculated lifetime of the roller journal bearing 59".

However, the lifetime of the actual roller journal bearing 59 is affected by not only a fatigue lifetime but also a number of other factors. For example, it is conceivable that substances mixed in a lubricating oil cause a flaw in the rolling face and facilitate consumption of the lifetime of the roller journal bearing 59.

On the other hand, the anomaly sensing system senses damage on the rolling face occurring due to temporal use of the roller journal bearing 59 indirectly from vibration or the like, for example. That is, while the remaining lifetime estimation system evaluates a calculated lifetime of the roller journal bearing 59, the anomaly sensing system evaluates the actual lifetime of the roller journal bearing 59.

The combined use of both of such systems enables evaluation of the lifetime of the roller journal bearing 59 taking not only a calculated "fatigue lifetime" but also "effects other than the fatigue lifetime" due to substances mixed in a lubricating oil or the like, for example, into account. Further, the fatigue lifetime can be evaluated by both the systems, this enables more accurate maintenance of the roller journal bearing 59.

Note that such evaluation performed by both the systems may result in a discrepancy between a calculated lifetime in accordance with lifetime monitoring and an actual lifetime in accordance with anomaly sensing. In such a case, for example, it is conceivable that the actual lifetime precedes the calculated lifetime or that a factor other than the fatigue lifetime is predominant, and the result may be reflected to the maintenance policy, for example, increasing the frequency of lubricating oil change, reducing mixed substances by changing oil viscosity or the like, or the like.

Note that the present disclosure is not limited to each embodiment described above, and modification is possible as appropriate within the scope not departing from the spirit thereof.

The solid fuel used is not limited to those in the present disclosure, and coal, biomass fuel, petroleum coke (PC), or the like may be used. Furthermore, these types of solid fuel may be used in combination.

The anomaly detection system, the solid fuel pulverizing device, and the anomaly detection method disclosed in the embodiments described above are understood as follows, for example.

The anomaly detection system according to one aspect of the present disclosure is an anomaly detection system for a roller journal bearing (59) accommodated inside a housing (11) forming an outer shell of a solid fuel pulverizing device (100) and rotatably supporting a pulverizing roller (13) configured to pulverize solid fuel between the pulverizing roller (13) and a pulverizing table (12), and the anomaly detection system includes: a sensing unit (80) provided to an installation part (48a) of a support part (45) and configured to sense information occurring in the support part (45) due to rotation of the pulverizing roller (13), the support part (45) supporting the pulverizing roller (13) via the roller journal bearing (59) and being attached to the housing (11), and the installation part (48a) being located outside the housing (11); and a detecting unit (50) configured to detect an anomaly of the roller journal bearing (59) based on information sensed by the sensing unit (80).

In the above configuration, the sensing unit is provided to the support part. Accordingly, for example, compared to a case where the sensing unit is provided inside the pulverizing roller, vibration occurring in the pulverizing roller can be less likely to be transmitted to the sensing unit. Therefore, occurrence of a failure of the sensing unit due to vibration of the pulverizing roller can be suppressed. Further, the sensing unit is provided at the installation part of the support part located outside the housing. Accordingly, since the sensing unit is less likely to be affected by a high-temperature gas (such as air) inside the housing of the mill, occurrence of a failure of the sensing unit can be suppressed. In such a way, since the sensing unit can be less likely to fail, the reliability of the sensing unit can be improved.

Further, the sensing unit is provided to the installation part of the support part located outside the housing. Accordingly, it is possible to access the sensing unit without suspending the operation of the solid fuel pulverizing device or disassembling the housing or the pulverizing roller. Thus, the replacement or additional installment operation on the sensing unit can be simplified when the sensing unit is replaced because of a failure or maintenance, when a sensor is additionally installed to an already-installed solid fuel pulverizing device, or the like. Further, since the solid fuel pulverizing device can be operated even during the replacement or additional installment operation, the operational efficiency can be improved.

Further, in the anomaly detection system according to one aspect of the present disclosure, the sensing unit (80) senses information on vibration of the support part (45), and the detecting unit (50) detects an anomaly of the roller journal bearing (59) based on the information on vibration sensed by the sensing unit (80).

In the above configuration, the detecting unit detects an anomaly of the roller journal bearing based on vibration sensed by the sensing unit. When the pulverizing roller pulverizes solid fuel, the pulverizing roller vibrates. The vibration occurring in the pulverizing roller is transmitted to the support part from the pulverizing roller via the roller journal bearing. Thus, when an anomaly occurs in the roller journal bearing, vibration transmitted to the support part changes. Therefore, an anomaly of the roller journal bearing can be detected.

Further, the anomaly detection system according to one aspect of the present disclosure senses information on vibration in a plurality of directions.

In the above configuration, since various forms of vibration can be sensed, detection accuracy for an anomaly of the roller journal bearing can be improved at the detection unit.

Further, in the anomaly detection system according to one aspect of the present disclosure, the detecting unit (50) performs a process of removing, from the information on vibration sensed by the sensing unit (80), a component having a frequency of vibration occurring when the pulverizing roller (13) pulverizes the solid fuel and/or a component having a natural frequency of a transmission path from the roller journal bearing (59) to the sensing unit (80).

The frequency of vibration occurring when the pulverizing roller pulverizes solid fuel and the natural frequency of the transmission path from the roller journal bearing to the sensing unit do not change regardless of the state of the roller journal bearing (regardless of whether it is normal or abnormal). In the above configuration, such frequencies of vibration that do not change regardless of the state of the roller journal bearing are removed. Therefore, the accuracy to detect an anomaly of the roller journal bearing can be improved.

Further, in the anomaly detection system according to one aspect of the present disclosure, the detecting unit (50) performs a process of finding a level of a signal for each frequency for the information on vibration sensed by the sensing unit (80).

In the above configuration, the detecting unit performs a process of organizing signal levels for each frequency on the information on vibration sensed by the sensing unit. This enables more accurate detection of an anomaly of the roller journal bearing.

Further, in the anomaly detection system according to one aspect of the present disclosure, the detecting unit (50) determines the degree of progress of an anomaly of the roller journal bearing (59) based on the information on vibration sensed by the sensing unit (80).

In the above configuration, the detecting unit detects the degree of progress of an anomaly of the roller journal bearing based on the information on vibration sensed by the sensing unit. As an anomaly (for example, damage) of the roller journal bearing progresses, vibration of the support part changes. Thus, the detecting unit can detect the degree of progress of an anomaly of the roller journal bearing.

Further, the solid fuel pulverizing device according to one aspect of the present disclosure includes: a housing (11) forming an outer shell; a pulverizing table (12) accommodated inside the housing (11); a pulverizing roller (13) accommodated inside the housing (11) and configured to pulverize solid fuel between the pulverizing roller (13) and the pulverizing table (12); a support part (45) attached to the housing (11) and supporting the pulverizing roller (13); a roller journal bearing (59) rotatably supporting the pulverizing roller (13) on the support part (45); and the anomaly detection system according to any one of the above.

Further, in the solid fuel pulverizing device according to one aspect of the present disclosure, the support part (45) and the roller journal bearing (59) are coupled to each other so as to avoid relative motion, and the support part (45) and the sensing unit (80) are coupled to each other so as to avoid relative motion.

In the above configuration, the support part and the roller journal bearing are joined to each other so as to avoid relative motion. Further, the support part and the sensing unit are joined to each other so as to avoid relative motion. Accordingly, the information from the roller journal bearing is less likely to change in the joining part between the support part and the roller journal bearing and the joining part between the support part and the sensing unit. Therefore, the information on the roller journal bearing can be suitably sensed by the sensing unit. This enables more accurate detection of an anomaly of the roller journal bearing.

Note that the support part and the roller journal bearing may be joined to each other by shrink fitting or press fitting, for example, so as to avoid relative motion. Further, the support part and the sensing unit may be joined to each other by using a bolt or the like, for example, so as to avoid relative motion. Further, "joined to each other so as to avoid relative motion" only requires joining to the extent that vibration of the roller journal bearing can be suitably sensed by the sensing unit provided to the support part, and it is apparent that slight relative motion is tolerated.

Further, the solid fuel pulverizing device according to one aspect of the present disclosure includes: the anomaly detection system according to any one of the above; and a remaining lifetime estimation system configured to estimate a remaining lifetime of the roller journal bearing based on operational information on the pulverizing roller, and the solid fuel pulverizing device estimates a remaining lifetime of the roller journal bearing based on information derived by the anomaly detection system and information derived by the remaining lifetime estimation system.

As with the above configuration, with the combined use of the anomaly sensing system and the remaining lifetime estimation system for the roller journal bearing, it is possible to monitor the roller journal bearing by using the remaining lifetime estimation system for regular lifetime consumption and using the anomaly sensing system for anomaly sensing. This makes it possible to extend the lifetime while ensuring the reliability of the roller journal bearing.

Further, the anomaly detection method according to one aspect of the present disclosure is an anomaly detection method for a roller journal bearing (59) accommodated inside a housing (11) forming an outer shell of a solid fuel pulverizing device and rotatably supporting a pulverizing roller (13) configured to pulverize solid fuel between the pulverizing roller (13) and a pulverizing table (12), and the anomaly detection method includes: a sensing step of, at a sensing unit (80) provided to an installation part (48a) of a support part (45), sensing information occurring in the support part (45) due to rotation of the pulverizing roller (13), in which the support part (45) supports the pulverizing roller (13) via the roller journal bearing (59) and is attached to the housing (11) and the installation part (48a) is located outside the housing (11); and a detecting step of detecting an anomaly of the roller journal bearing (59) based on information sensed by the sensing unit (80).

[Reference Signs List]

| | |
|---|---|
| 1 | power plant |
| 10 | mill (pulverizing unit) |
| 11 | housing |
| 12 | pulverizing table |
| 13 | pulverizing roller |
| 14 | gear (drive transmission unit) |
| 15 | mill motor (drive unit) |
| 16 | rotary classifier (classifying unit) |
| 16a | blade |
| 17 | coal feed pipe (fuel feed unit) |
| 18 | classifier motor |
| 19 | outlet port |
| 21 | bunker (storage unit) |
| 22 | downspout part |
| 25 | coal feeder (fuel feeder) |
| 26 | transport unit |
| 27 | coal feeder motor |
| 30 | fan unit (carrier gas supply unit) |
| 30a | hot gas flow path |
| 30b | cold gas flow path |
| 30c | hot gas damper |
| 30d | cold gas damper |
| 31 | primary air fan (PAF) |
| 32 | forced draft fan (FDF) |
| 33 | induced draft fan (IDF) |
| 34 | air preheater (heat exchanger) |
| 40 | state detecting unit (temperature detecting unit, differential pressure detecting unit) |
| 41 | bottom face |
| 42 | ceiling |
| 45 | journal head (support part) |
| 46 | pressing device (pulverizing load application unit) |
| 47 | support arm |
| 48 | eccentric shaft |
| 48a | tip (installation part) |
| 50 | control unit (detecting unit) |
| 51 | hub |
| 52 | journal shaft |
| 53 | intermediate piston |
| 54 | hydraulic load unit |
| 56 | main body |
| 57 | protruding part |

| 58 | stopper |
| --- | --- |
| 59 | journal bearing (roller journal bearing) |
| 62 | acquisition unit |
| 63 | estimation unit |
| 64 | prediction unit |
| 65 | planning unit |
| 71 | measurement bar |
| 72 | gap sensor |
| 80 | vibration sensor (sensing unit) |
| 80a | first sensor |
| 80b | second sensor |
| 80c | third sensor |
| 81 | base |
| 91 | signal amplifier |
| 92 | signal processing device |
| 93 | signal computation device |
| 94 | plant control device |
| 95 | display device |
| 96 | display device |
| 100 | solid fuel pulverizing device |
| 101 | information aggregation system |
| 102 | server |
| 103 | planning system |
| 110 | primary air flow path (carrier gas flow path) |
| 111 | CPU |
| 120 | fine pulverized fuel supply flow path (fine pulverized fuel supply pipe) |
| 121 | ROM |
| 130 | RAM |
| 140 | HDD |
| 150 | communication unit |
| 180 | bus |
| 200 | boiler |
| 210 | furnace |
| 220 | burner (combustion device) |

**Claims**

1. An anomaly detection system for a roller journal bearing, the roller journal bearing being accommodated inside a housing forming an outer shell of a solid fuel pulverizing device and rotatably supporting a pulverizing roller configured to pulverize solid fuel between the pulverizing roller and a pulverizing table, the anomaly detection system comprising:

   a sensing unit provided to an installation part of a support part and configured to sense information occurring in the support part due to rotation of the pulverizing roller, the support part supporting the pulverizing roller via the roller journal bearing and being attached to the housing, and the installation part being located outside the housing; and
   a detecting unit configured to detect an anomaly of the roller journal bearing based on information sensed by the sensing unit.

2. The anomaly detection system according to claim 1,

   wherein the sensing unit senses information on vibration of the support part, and
   wherein the detecting unit detects an anomaly of the roller journal bearing based on the information on vibration sensed by the sensing unit.

3. The anomaly detection system according to claim 2, wherein the sensing unit senses information on vibration in a plurality of directions.

4. The anomaly detection system according to claim 2 or 3, wherein the detecting unit performs a process of removing, from the information on vibration sensed by the sensing unit, a component having a frequency of vibration occurring when the pulverizing roller pulverizes the solid fuel and/or a component having a natural frequency of a transmission path from the roller journal bearing to the sensing unit.

5. The anomaly detection system according to any one of claims 2 to 4, wherein the detecting unit performs a process of finding a level of a signal for each frequency for the information on vibration sensed by the sensing unit.

6. The anomaly detection system according to any one of claims 2 to 5, wherein the detecting unit determines the degree of progress of an anomaly of the roller journal bearing based on the information on vibration sensed by the sensing unit.

7. A solid fuel pulverizing device comprising:

   a housing forming an outer shell;
   a pulverizing table accommodated inside the housing;
   a pulverizing roller accommodated inside the housing and configured to pulverize solid fuel between the pulverizing roller and the pulverizing table;
   a support part attached to the housing and supporting the pulverizing roller;
   a roller journal bearing rotatably supporting the pulverizing roller on the support part; and
   the anomaly detection system according to any one of claims 1 to 6.

8. The solid fuel pulverizing device according to claim 7,

   wherein the support part and the roller journal bearing are coupled to each other so as to avoid relative motion, and
   wherein the support part and the sensing unit are coupled to each other so as to avoid relative motion.

9. A solid fuel pulverizing device comprising:

   the anomaly detection system according to any one of claims 1 to 6; and
   a remaining lifetime estimation system configured to estimate a remaining lifetime of the roller journal bearing based on operational information on the pulverizing roller,
   wherein the solid fuel pulverizing device estimates a remaining lifetime of the roller journal bearing based on information derived by the anomaly detection system and information derived by the remaining lifetime estimation system.

10. An anomaly detection method for a roller journal bearing, the roller journal bearing being accommodated inside a housing forming an outer shell of a solid fuel pulverizing device and rotatably supporting a pulverizing roller configured to pulverize solid fuel between the pulverizing roller and a pulverizing table, the anomaly detection method comprising:

   a sensing step of, at a sensing unit provided to an installation part of a support part, sensing information occurring in the support part due to rotation of the pulverizing roller, the support part supporting the pulverizing roller via the roller journal bearing and being attached to the housing, and the installation part being located outside the housing; and
   a detecting step of detecting an anomaly of the roller journal bearing based on information sensed by the sensing unit.

FIG. 1

EP 4 400 214 A1

# FIG. 2

FIG. 3

# FIG. 4

FIG. 5

EP 4 400 214 A1

# FIG. 6

EP 4 400 214 A1

（a）

SIGNAL VALUE

TIME

→

（b）

SIGNAL VALUE

TIME

＋

（c）

SIGNAL VALUE

TIME

32

FIG.7

FIG. 8

（a）

（b）

SIGNAL VALUE

TIME

SIGNAL VALUE

FREQUENCY

FIG. 9

EP 4 400 214 A1

# FIG. 10

# FIG. 11

CONTROL UNIT

ACQUISITION UNIT ~62

~50

ESTIMATION UNIT ~63

# FIG. 12

# FIG. 13

# FIG. 14

FIG. 15

# FIG. 16

```
                    ┌─────────────┐
                    │    START    │
                    └──────┬──────┘
                           │
                           ▼
        ┌──────────────────────────────────────┐
        │   ACQUIRE ACTUAL MEASUREMENT OF       │────S101
        │   HYDRAULIC LOAD AND LIFT AMOUNT      │
        └──────────────────┬───────────────────┘
                           │
                           ▼
        ┌──────────────────────────────────────┐
        │   CALCULATE ROLLER INCLINATION ANGLE  │────S102
        └──────────────────┬───────────────────┘
                           │
                           ▼
        ┌──────────────────────────────────────┐
        │  CALCULATE RADIAL LOAD AND THRUST LOAD│────S103
        └──────────────────┬───────────────────┘
                           │
                           ▼
        ┌──────────────────────────────────────┐
        │   ESTIMATE REMAINING LIFETIME OF      │────S104
        │   JOURNAL BEARING                     │
        └──────────────────┬───────────────────┘
                           │
                           ▼
                    ┌─────────────┐
                    │     END     │
                    └─────────────┘
```

# FIG. 17

# FIG. 18

FIG. 19

# FIG. 20

CONTROL UNIT

| ACQUISITION UNIT | ~62 |

| ESTIMATION UNIT | ~63 |

| PREDICTION UNIT | ~64 |

| PLANNING UNIT | ~65 |

~50

# FIG. 21

REMAINING LIFETIME

TIME

BEARING ANOMALY DEGREE

t1 t2 t3 D

## INTERNATIONAL SEARCH REPORT

| International application No. |
| --- |
| **PCT/JP2022/039091** |

**A. CLASSIFICATION OF SUBJECT MATTER**

*B02C 15/04*(2006.01)i; *F16C 19/52*(2006.01)i; *F16C 41/00*(2006.01)i; *G01M 13/045*(2019.01)i
FI: F16C41/00; B02C15/04; G01M13/045; F16C19/52

According to International Patent Classification (IPC) or to both national classification and IPC

**B. FIELDS SEARCHED**

Minimum documentation searched (classification system followed by classification symbols)
B02C15/04; F16C19/52; F16C41/00; G01M13/045

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2021-94530 A (UBE MACHINERY CORPORATION LTD.) 24 June 2021 (2021-06-24) paragraphs [0012]-[0024], fig. 1-7 | 1-4, 6-10 |
| A | | 5 |
| Y | CD-ROM of the specification and drawings annexed to the request of Japanese Utility Model Application No. 85819/1991 (Laid-open No. 28431/1993) (ISHIKAWAJIMA-HARIMA HEAVY INDUSTRIES CO., LTD.) 16 April 1993 (1993-04-16), paragraphs [0011]-[0020], fig. 1-4 | 1-4, 6-10 |
| Y | JP 2019-155286 A (UBE MACHINERY CORPORATION LTD.) 19 September 2019 (2019-09-19) paragraphs [0002]-[0005] | 4, 6-9 |
| A | JP 2018-81012 A (UBE MACHINERY CORPORATION LTD.) 24 May 2018 (2018-05-24) | 1-10 |
| A | JP 2016-2506 A (UBE MACHINERY CORPORATION LTD.) 12 January 2016 (2016-01-12) | 1-10 |
| A | JP 6-238182 A (KAWASAKI JUKOGYO KABUSHIKI KAISHA) 30 August 1994 (1994-08-30) | 1-10 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 December 2022** | **27 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
|---|
| **PCT/JP2022/039091** |

**C.    DOCUMENTS CONSIDERED TO BE RELEVANT**

| Category* | Citation of document, with indication, where appropriate, of the relevant passages | Relevant to claim No. |
|---|---|---|
| A | US 2014/0151474 A1 (ALSTOM TECHNOLOGY LTD.) 05 June 2014 (2014-06-05) | 1-10 |

Form PCT/ISA/210 (second sheet) (January 2015)

INTERNATIONAL SEARCH REPORT
Information on patent family members

| International application No.  PCT/JP2022/039091 |
|---|

| Patent document cited in search report | | | Publication date (day/month/year) | Patent family member(s) | | | Publication date (day/month/year) |
|---|---|---|---|---|---|---|---|
| JP | 2021-94530 | A | 24 June 2021 | (Family: none) | | | |
| JP | 5-28431 | U1 | 16 April 1993 | (Family: none) | | | |
| JP | 2019-155286 | A | 19 September 2019 | (Family: none) | | | |
| JP | 2018-81012 | A | 24 May 2018 | (Family: none) | | | |
| JP | 2016-2506 | A | 12 January 2016 | (Family: none) | | | |
| JP | 6-238182 | A | 30 August 1994 | (Family: none) | | | |
| US | 2014/0151474 | A1 | 05 June 2014 | US | 2012/0126044 | A1 | |
| | | | | US | 2017/0021362 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018081012 A